Europäisches Patentamt

(19) European Patent Office

Office européen des brevets

(11) Numéro de publication : **0 282 394 B1**

(12) **FASCICULE DE BREVET EUROPEEN**

(45) Date de publication du fascicule du brevet :
04.09.91 Bulletin 91/36

(51) int. Cl.$^5$ : **B64D 1/04**

(21) Numéro de dépôt : **88400471.4**

(22) Date de dépôt : **01.03.88**

(54) **Dispositif et procédé de tir sélectif de cartouches pour aéronef ou autre appareil.**

(30) Priorité : 04.03.87 FR 8702923

(43) Date de publication de la demande :
14.09.88 Bulletin 88/37

(45) Mention de la délivrance du brevet :
04.09.91 Bulletin 91/36

(84) Etats contractants désignés :
**DE FR GB IT SE**

(56) Documents cités :
**US-A- 3 598 015**
**US-A- 3 779 129**

(73) Titulaire : **R. ALKAN & Cie.**
**Rue du 8 mai 1945**
**F-94460 Valenton (FR)**

(72) Inventeur : **Guimier, Jacques Armand René**
**11 rue de Florian**
**F-77170 Servon (FR)**
inventeur : **Coutin, Pierre Fernand**
**117 avenue du Général Michel Bizot**
**F-75012 Paris (FR)**

(74) Mandataire : **Colas, Jean-Pierre et al**
**Cabinet de Boisse 37, avenue Franklin D.**
**Roosevelt**
**F-75008 Paris (FR)**

## Description

L'invention concerne un dispositif et un procédé de tir sélectif de cartouches en chargeurs multiples portés par un aéronef ou autre appareil.

L'autoprotection des aéronefs, avions ou hélicoptères, contre des moyens de destruction à guidage par ondes électromagnétiques ou par rayonnements infrarouges par exemple, est facilitée par des éjections de leurres passifs ou actifs. Les premiers ont pour but de se substituer à l'aéronef réel en offrant une fausse cible à l'organe de guidage, radar ou détecteur infrarouge, des moyens de destruction, les seconds d'émettre un signal radioélectrique de brouillage.

Ces leurres sont couramment éjectés à partir de cartouches contenant soit des paillettes métallisées servant de réflecteur radar, soit des produits pyrotechniques qui brûlent en émettant un rayonnement infrarouge, soit un émetteur d'ondes électromagnétiques ou autres.

Il est connu d'installer ces cartouches de leurrage, et éventuellement aussi des cartouches de défense ou d'attaque actives envoyant par exemple des charges explosives, ou des cartouches destinées à divers autres usages tels que l'éclairement d'un site, dans des chargeurs modulaires regroupant généralement un certain nombre de cartouches du même type. Ces chargeurs sont équipés de leurs cartouches en ateliers et un ou plusieurs d'entre eux, contenant des cartouches d'un ou plusieurs types, sont installés dans un ou plusieurs dispositifs d'emport sur aéronef. Ces dispositifs d'emport de cartouches peuvent, soit faire partie intégrante de la structure de l'aéronef, soit constituer un équipement installé sur les points d'emport de charges externes de l'aéronef. Des chargeurs modulaires susceptibles d'équiper de tels dispositifs d'emport de cartouches sont notamment décrits dans les demandes de brevet EP-A-0149380 et FR-A-2557856.

La charge utile des cartouches de leurrage, paillettes métallisées, combustible à émission infrarouge ou émetteur de brouillage par exemple, dépend de la menace à leurrer ou des signatures électromagnétiques et infrarouges de l'aéronef à protéger. Généralement, l'utilisateur est en possession d'informations sur les menaces contre lesquelles il doit protéger ses aéronefs, et en particulier sur les caractéristiques des systèmes d'acquisition et de guidage des moyens de destruction qui leur seront opposés. Ces données lui permettent de déterminer les paramètres du leurrage qu'il mettra en oeuvre, tels que quantité et nature des paillettes, composition et volume des munitions infrarouges, caractéristiques des signaux radioélectriques de brouillage, séquences de tir des cartouches.

L'initiative du tir peut revenir soit au pilote, soit à un organe de décision externe comprenant, par exemple, un détecteur de menace, et faisant partie, au même titre que le dispositif de tir de cartouches, du système de contre-mesures de l'aéronef.

Dans les dispositifs connus de tir de cartouches, les séquences de tir sont spécifiques du type de cartouches employé et du type de chargeur embarqué, ce qui, dans le cas d'un déclenchement manuel, oblige le pilote à un choix difficile à un moment critique de sa mission et, dans le cas d'un déclenchement automatique par l'organe de décision externe, conduit à une limitation du nombre de séquences utilisables. Par ailleurs, ces dispositifs connus sont tributaires du mauvais fonctionctionnement éventuel de certaines cartouches et d'une mise en place incorrecte des chargeurs due à une fausse manoeuvre d'un armurier. Il peut en résulter un défaut de tir de certaines cartouches au cours d'une séquence ou le tir de cartouches inappropriées à la menace détectée.

Dans un domaine voisin, le document US-A-3779129 décrit un dispositif électrique de contrôle et de gestion d'un système d'arme comprenant plusieurs postes pouvant recevoir chacun un parmi plusieurs types de charges telles que des bombes, missiles, etc... Ce dispositif électrique comprend des circuits de sélection qui sont corrélés logiquement au poste auquel ils sont associés. Ces circuits de sélection comprennent un commutateur pour programmer leur logique câblée en fonction de la charge qui se trouve embarquée au poste. Les commutateurs peuvent faire partie de bouchons logiques interchangeables permettant d'adapter les circuits de sélection.

Le dispositif du document US-A-3779129 suppose que chaque circuit de sélection associé à un poste est convenablement programmé en fonction du type de charge embarqué à ce poste et qu'il n'y a pas d'erreur dans le chargement. Ce dispositif reste donc tributaire de fausses manoeuvres et, en outre, ne permet de gérer qu'un seul type de charge par poste d'emport.

Le document US-A-3598015 vise un système de tir de missiles selon le préambule des revendications 1 et 15 pour aéronef comportant un ou plusieurs dispositifs d'emport de missiles. Chaque dispositif d'emport peut être chargé avec des missiles de quatre types différents et des circuits électroniques permettent de commander sélectivement le tir d'un ou plusieurs missiles d'un même type et de décompter du chargement initial le nombre de missiles de ce type qui ont été tirés.

Le tir d'un ou plusieurs missiles d'un type donné peut être déclenché indépendamment de la position des missiles dans le dispositif d'emport, grâce à une matrice de détrompage associée à chaque dispositif d'emport. Cette matrice comporte quatre rangées correspondant aux quatre types différents de missiles et dix-neuf colonnes correspondant respectivement aux dix-neuf tubes de logement des missiles que comporte chaque dispositif d'emport. La matrice est programmée au moyen de pions rapportés sur un tableau à l'intersection de la ligne et de la colonne sélectionnée.

Ce travail doit être fait par l'armurier au moment où le dispositif d'emport est équipé de ses différents types de missiles, c'est-à-dire lors de la préparation de l'aéronef en vue de sa mission. Chaque missile doit être programmé individuellement sur la matrice. Si l'armurier fait une erreur de programmation (c'est-à-dire place un pion à une position erronée), les circuits électriques sont incapables de le détecter, ce qui peut se traduire par une absence de tir ou par le tir d'un missile d'un type autre que celui qui a été sélectionné par le pilote. En outre, le système est incapable de détecter le chargement dans le dispositif d'un missile d'un type non autorisé pour la mission considérée.

De plus, les indications fournies au pilote sur le nombre de missiles de chaque type dont il dispose reposent sur l'initialisation de compteurs qui sont décrémentés à chaque tir. En cas d'erreur lors du chargement en missiles et/ou de la programmation de la matrice et/ou de l'initialisation des compteurs, les nombres affichés au pilote peuvent être inexacts, ce qui peut avoir de très graves conséquences.

L'invention vise à éliminer les inconvénients des systèmes connus, notamment les risques liés aux erreurs de manipulation, au moyen d'un dispositif de tir sélectif de cartouches permettant une adaptation souple à chaque appareil et à chaque type de mission, grâce à une gestion individuelle des divers types de cartouches quelles que soient les caractéristiques des chargeurs embarqués, leur emplacement dans un dispositif d'emport et le type de cartouches qu'ils contiennent chacun.

L'invention vise également à fournir un dispositif et un procédé qui, pour un chargement donné en cartouches correspondant au profil prévu de la mission, permettent, face à une situation donnée, d'optimiser le tir des cartouches grâce au choix, manuel ou automatique, offert à l'opérateur entre un grand nombre de séquences de tir possibles, tout en simplifiant au maximum la tâche de l'opérateur au moment de la mise en oeuvre du tir.

L'invention a également pour but de fournir un dispositif qui, appliqué à un aéronef, conjugue une grande simplicité d'utilisation avec un encombrement minimal dans le poste de pilotage.

Un autre but de l'invention est de fournir un dispositif de tir sélectif de cartouches en chargeurs multiples qui offre une grande sûreté de fonctionnement.

A cet effet, l'invention a pour objet un dispositif de tir sélectif de munitions telles que des cartouches pour aéronef ou autre appareil, comprenant au moins un dispositif d'emport d'une pluralité de munitions d'un ou plusieurs types différents et des moyens électroniques pour commander sélectivement la mise à feu d'au moins une munition d'un type donné indépendamment de son emplacement dans le dispositif d'emport et actualiser des moyens de comptage des munitions de chaque type disponibles à bord de l'appareil,
caractérisé en ce que :

a) le dispositif d'emport comporte, comme connu en soi :

— des moyens de réception de plusieurs chargeurs modulaires amovibles et interchangeables d'un ou plusieurs modèles, chargés chacun avec au moins un parmi plusieurs types de cartouches et comportant chacun un code d'identification fonction du modèle de chargeur et du type de cartouches dont il est équipé,

— au moins un module électronique de mise à feu de cartouches associé à chaque chargeur,

et en ce que lesdits moyens électroniques comprennent :

b) un boîtier électronique de gestion du chargement et de distribution sélective des ordres de mise à feu associé à chaque dispositif d'emport et comportant une première mémoire programmable, dans laquelle sont stockés des premiers paramètres représentatifs des modèles de chargeurs et des types de cartouches autorisés, ledit boîtier électronique de gestion et de distribution étant apte à lire l'adresse et le code d'identification de chaque chargeur, à inventorier le chargement effectif dudit dispositif d'emport en cartouches des différents types, à valider type par type lesdites cartouches inventoriées en fonction desdits premiers paramètres stockés dans ladite première mémoire programmable, à commander sélectivement la distribution des ordres de mise à feu desdites cartouches validées, et à actualiser ledit inventaire du chargement en fonction desdites mises à feu, et

c) un boîtier électronique de commande connecté à chaque boîtier électronique de gestion et de distribution et comportant des moyens d'affichage d'informations sur l'état dudit dispositif de tir et une seconde mémoire programmable adaptée pour être chargée avec lesdits premiers paramètres représentatifs des modèles de chargeurs et des types de cartouches autorisés et avec des seconds paramètres représentatifs de différentes séquences de tirs de cartouches d'un ou plusieurs types susceptibles d'être mises en oeuvre, ledit boîtier électronique de commande étant apte à programmer lesdits premiers paramètres dans ladite première mémoire programmable de chaque dispositif de gestion et de distribution, à sélectionner l'une desdites séquences de tir en réponse à la réception d'un ordre de tir donné, à engendrer, par l'intermédiaire d'au moins un boîtier de gestion et de distribution, le tir d'une ou plusieurs cartouches d'un ou plusieurs types suivant ladite séquence sélectionnée, et à calculer, à partir d'informations fournies par lesdits boîtiers électroniques de gestion et de distribution, le nombre de cartouches valides disponibles dans chaque type et afficher lesdits nombres sur lesdits moyens d'affichage.

L'invention a également pour objet un procédé de tir sélectif de cartouches au moyen d'un dispositif tel que défini ci-dessus, suivant lequel chaque dispositif d'emport est équipé de chargeurs d'un ou plusieurs modèles, chargés chacun avec un parmi plusieurs types de cartouches donnés choisis en fonction de la mission à remplir, caractérisé en ce que :

a) on introduit dans la seconde mémoire programmable du boîtier de commande lesdits paramètres représentatifs, d'une part des modèles de chargeurs et des types de cartouches autorisés, d'autre part des différentes séquences de tir susceptibles d'être mises en oeuvre,

b) on transfère dans la première mémoire programmable de chaque boîtier de gestion et de distribution lesdits premiers paramètres représentatifs des modèles de chargeurs et des types de cartouches autorisés,

c) on active chaque dispositif d'emport pour permettre à chaque boîtier de gestion et de distribution de :

— lire le code d'identification et l'adresse de chaque chargeur embarqué ;

— comparer les codes chargeurs lus avec les codes chargeurs autorisés qui sont mémorisés dans ladite première mémoire programmable consécutivement à ladite phase b) ; et

— valider les chargeurs dont le code est autorisé.

D'autres caractéristiques et avantages de l'invention ressortiront de la description qui va suivre d'un mode de sa réalisation donné uniquement à titre d'exemple et illustré par les dessins annexés sur lesquels :

La figure 1 est un schéma synoptique d'un dispositif de tir sélectif de cartouches en chargeurs multiples pour aéronef ;

La figure 1A est un schéma de détail d'un emplacement pour chargeur de la figure 1.

La figure 2 est un schéma-bloc illustrant les différents ensembles électroniques du dispositif de la figure 1 ;

La figure 3 est un schéma synoptique illustrant la distribution vers les modules de puissance associés aux chargeurs des ordres de tir provenant d'un boîtier de gestion et de distribution ;

La figure 4 est un schéma électrique montrant deux modules de puissance associés à un chargeur double ;

Les figures 5 et 6 sont des schémas illustrant la structure du programme du poste de commande du dispositif ;

Les figures 7 et 8 montrent la configuration des tables d'affectation des codes chargeurs et de référence des chargeurs mémorisées dans chaque boîtier de gestion et de distribution, et

Les figures 9 et 10 sont des schémas illustrant la structure du programme des boîtiers de gestion et de distribution du dispositif.

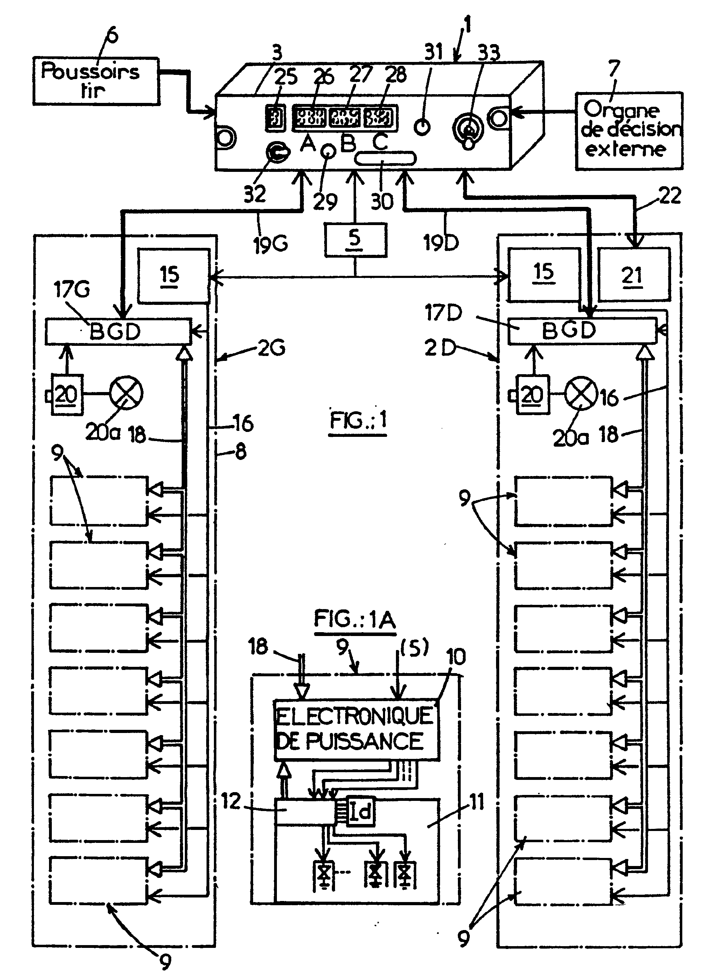

Le dispositif de tir sélectif de cartouches pour aéronef de la figure 1 comprend un poste de commande 1 placé dans le poste de pilotage de l'aéronef à portée du pilote et deux dispositifs d'emport de cartouches ci-après appelés lance-leurres, à savoir un lance-leurre gauche 2G et un lance-leurre droit 2D.

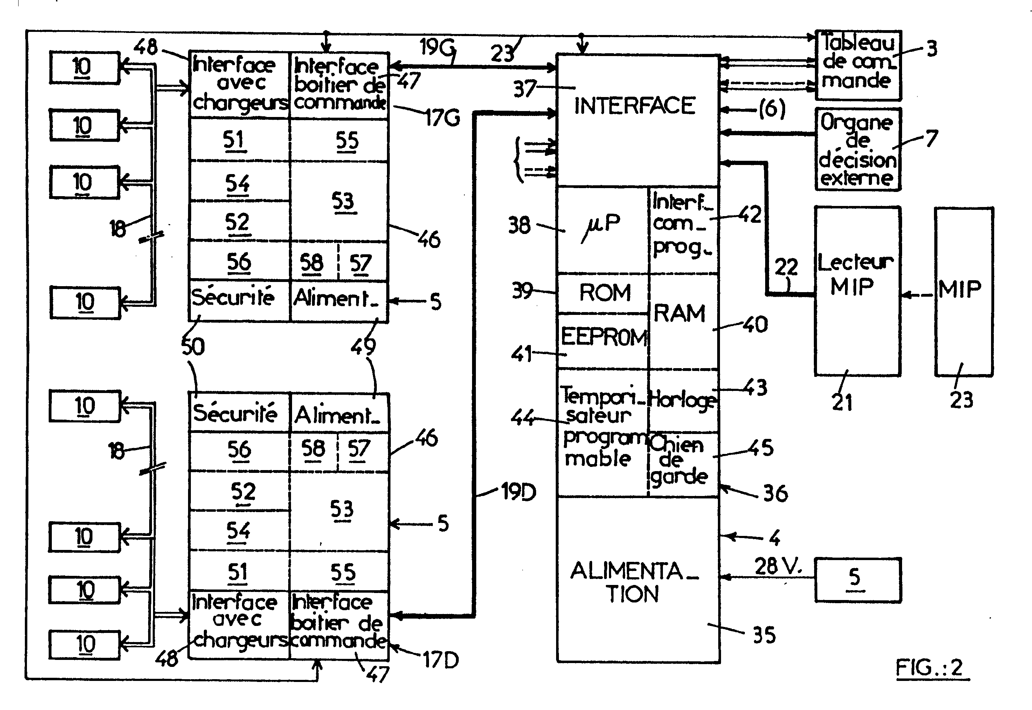

Le poste de commande 1 comprend un tableau de commande 3 et un bloc électronique 4 (figure 2) qui est connecté aux sources 5 d'alimentation en énergie électrique de l'aéronef, à des poussoirs de tir 6 à portée du pilote, et à un organe de décision externe 7 comprenant, entre autres, un détecteur de menace faisant partie, au même titre que le présent dispositif, du système de contre-mesures de l'aéronef. Les sous-ensembles 5, 6 et 7 sont connus et ne seront donc pas décrits en détail.

Chaque lance-leurres 2D, 2G comprend un châssis 8 dans lequel sont prévus un certain nombre d'emplacements 9 pour des chargeurs contenant des munitions.

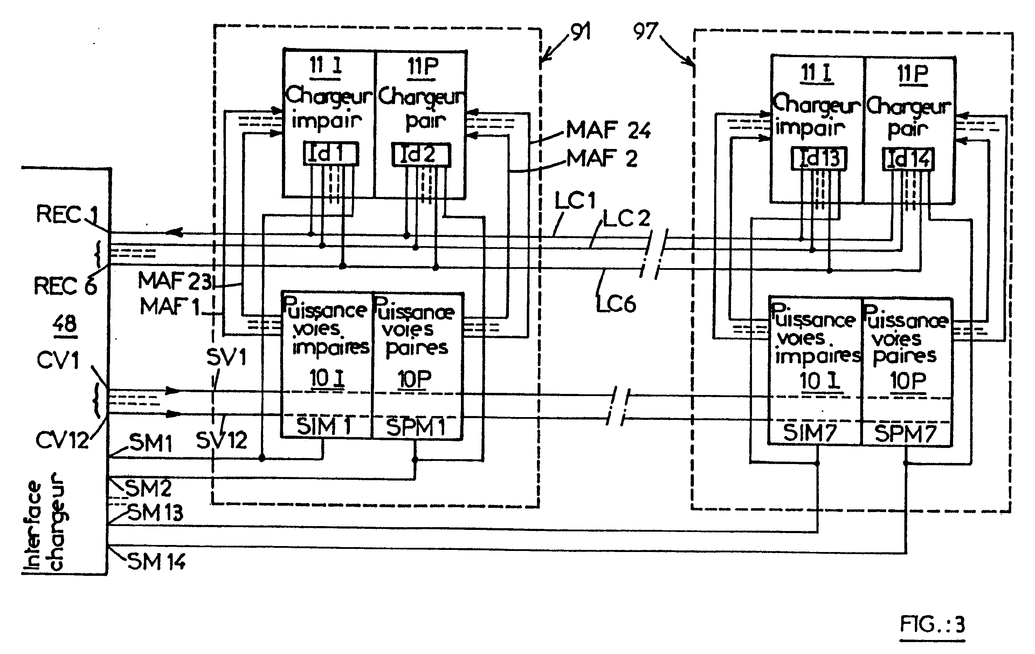

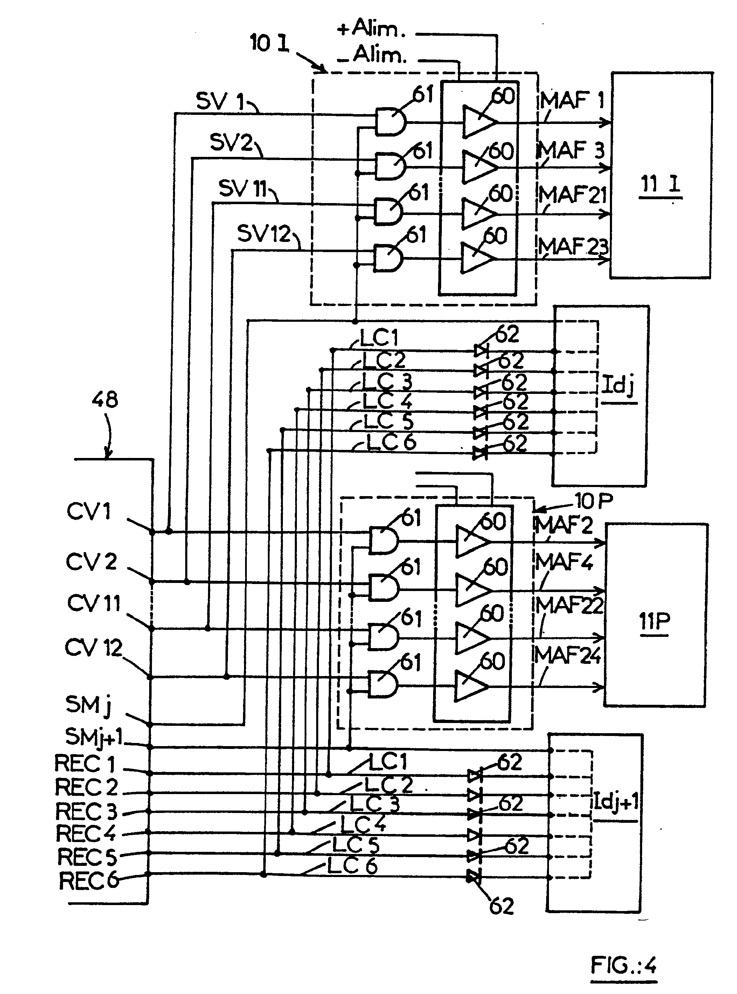

Comme représenté plus en détail à la figure 1A, à chaque emplacement 9 est prévu un module électronique de puissance ou mise à feu 10 qui fait partie intégrante du châssis 8 ainsi qu'un logement destiné à recevoir un chargeur modulaire et amovible 11. Cependant, comme on le verra à propos du mode préféré de réalisation des figures 3 et 4, chaque emplacement 9 peut, en variante, être pourvu de deux modules de puissance et être apte à recevoir deux chargeurs ou un chargeur double.

Les chargeurs 11 se présentent sous la forme de parallélépipèdes de petites dimensions dont les interfaces mécaniques et électriques sont identiques. Comme décrit dans le brevet FR-A-2557856, leur fixation dans le châssis 8 d'un lance-leurres peut être obtenue grâce à deux baïonnettes situées sur les flancs et à un téton d'encliquetage automatique facilitant la pose du chargeur bloqué par un étrier.

La connexion électrique d'un chargeur 11 au module électronique de puissance 10 correspondant peut être réalisée, comme décrit dans la demande de brevet européen EP-A-0149389, au moyen d'un connecteur 12 situé à l'une de ses extrémités et qui s'enfiche, dès la mise en place, dans sa contrepartie prévue sur le circuit électronique de puissance 10. Le connecteur 12 permet la transmission de la puissance électrique aux amorces des différentes cartouches contenues dans le chargeur, puissance qui est délivrée à partir de l'une des sources d'alimentation de l'aéronef, par exemple sous 28 Volts, par l'intermédiaire du module 10.

En outre, comme décrit dans cette même demande de brevet européen, un bouchon de codage amovible Id est inséré dans le câblage électrique à l'arrière du chargeur. Ce bouchon Id développe sur les broches du connecteur 12 un code dont la lecture électronique effectuée par adressage du module de puissance 10 permet l'identification et l'inventaire du contenu du chargeur.

Le contenu d'un chargeur est homogène, c'est-à-dire qu'il ne comprend que des cartouches identiques. Cependant, les chargeurs peuvent être de différents modèles se différenciant par le nombre et la taille des cartouches qu'ils contiennent. C'est ainsi qu'un même lance-leurres peut être équipé de chargeurs de plusieurs modèles différents contenant eux-mêmes des cartouches de types différents. Les cartouches peuvent comporter une ou deux amorces identiques ou non et des charges utiles de natures variées telles que des leurres passifs (électromagnétiques ou infrarouges) ou actifs (émetteurs de brouillage). D'autres types de cartouches peuvent encore être envisagés.

Les chargeurs peuvent occuper une place quelconque dans le lance-leurres et leur nombre est au maximum celui des emplacements 9 disponibles dans celui-ci. Les chargeurs sont préchargés en usines ou en ateliers et c'est alors que le bouchon de codage est mis en place manuellement.

Chaque lance-leurres comprend un organe de sécurité 15 constitué par un contacteur commandé par une palette aérodynamique. Ce contacteur est interposé entre la source d'alimentation 5 de l'aéronef et un conducteur 16 qui, à l'intérieur de chaque lance-leurres, distribue la puissance électrique aux différents modules de puissance 10. Le contacteur est normalement ouvert lorsque l'avion est au sol et que la palette pend verticalement et il est fermé lorsque, sous l'effet d'un vent relatif suffisant, la palette est plaquée contre le carénage du lance-leurres. Cet organe de sécurité 15 permet d'assurer que les cartouches ne seront pas mises à feu accidentellement au sol et de prévenir ainsi des accidents lors de la manipulation des chargeurs.

La commande des modules électroniques de puissance 10 ainsi que la gestion des cartouches des différents chargeurs est assurée dans chaque lance-leurres 2G, 2D par un boîtier électronique de gestion et de distribution 17G, 17D. Ce boîtier électronique est connecté aux différents modules électroniques de puissance 10 par une liaison électrique 18 qui sera décrite plus en détail dans la suite. Les boîtiers électroniques 17G, 17D des lance-leurres 2G et 2D sont connectés au poste de commande 1 par des liaisons séries 19G et 19D respectivement. En outre, chaque boîtier de gestion et de distribution est équipé d'un bouton poussoir d'initialisation 20 associé à un voyant 20a et permettant à un armurier ayant procédé au chargement d'un lance-leurres d'activer les circuits électroniques de celui-ci, à l'exclusion des modules de puissance commandés par la palette aérodynamique comme indiqué précédemment.

Enfin, à l'intérieur du lance-leurres droit 2D est logé un lecteur 21 de paramètres connecté au poste de commande 1 par une liaison série 22. Le lecteur 21 est pourvu d'un connecteur accessible par une trappe prévue dans le lance-leurres 2D et permettant le chargement dans la mémoire du poste de commande 1, au moyen d'un module d'insertion de paramètres (MIP) 23 (figure 2), des paramètres des séquences de tir retenus comme cela sera expliqué plus en détail dans la suite. En variante, le lecteur 21 de MIP peut être installé directement sur l'aéronef ou, au contraire, constituer un élément non embarqué qui sera connecté au poste de commande 1 lorsque l'aéronef est au sol.

Enfin, le tableau de commande 3 (figure 1) comprend un certain nombre de moyens d'affichage et de commande fournissant au pilote les différentes informations et commandes nécessaires à la mise en oeuvre du dispositif.

Ainsi, l'organe d'affichage 25 fournit sur un digit le numéro de la séquence de tir demandée et les organes d'affichage 26, 27 et 28 fournissent sur trois digits les nombres de cartouches encore disponibles. Par exemple, les voyants 26, 27 et 28 peuvent indiquer respectivement la disponibilité en leurres infrarouges A, en leurres électromagnétiques B et en cartouches de brouillage actives C.

Le tableau 3 comprend également un voyant lumineux 29 indiquant si une séquence de tir est en cours, un voyant 30 indiquant une panne du dispositif lorsqu'il est allumé, un bouton-poussoir 31 permettant de lancer une séquence de test des voyants et afficheurs, une clé 32 permettant d'incrémenter ou de décrémenter le numéro de séquence de tir désiré affiché sur l'afficheur 25 et un commutateur 33 permettant de faire le choix entre l'arrêt du dispositif, son fonctionnement en mode manuel et son fonctionnement en mode automatique.

On se reportera maintenant à la figure 2 qui montre la structure générale des différents sous-ensembles électroniques du dispositif de la figure 1.

Le bloc électronique 4 comprend essentiellement un circuit d'alimentation 35 connecté à la ou aux sources 5 d'alimentation en énergie électrique de l'aéronef, une unité centrale 36 et des circuits d'interface 37. Les circuits 37 assurent l'interface de l'unité centrale avec les différents voyants et organes de commande du tableau de commande 3, avec l'organe de décision externe 7, avec le lecteur 21 de MIP, avec les poussoirs de tir 6, et avec les boîtiers électroniques de gestion et de distribution 17G et 17D.

L'unité centrale 36 est organisée autour d'un microprocesseur 38 tel que, par exemple, un microprocesseur INTEL à huit bits de type MD8085. Au microprocesseur 38 sont associés :

— une mémoire ROM 39 (par exemple de type EPROM) recevant le programme opérationnel du dispositif,

— une mémoire RAM 40 qui reçoit des tables temporaires de travail du programme opérationnel,

— une mémoire EEPROM 41 destinée, en cas de coupures d'alimentation, à assurer la sauvegarde des paramètres essentiels au traitement,

— une interface de communication série programmable 42 permettant d'émettre ou de recevoir divers messages vers ou depuis l'extérieur,

— une horloge 43,

— un temporisateur programmable 44 qui détermine la vitesse de transmission au niveau de l'interface de communication série, et

— un chien de garde 45 qui contrôle les dépassements éventuels des durées de traitement et qui met le dispositif en alarme dans une telle situation.

Chacun des boîtiers de gestion et de distribution 17G et 17D comprend une unité centrale 46, un circuit 47 d'interface avec le bloc électronique 4 du poste de commande, un circuit 48 d'interface avec les modules de puissance 10 contenus dans le lance-leurres, un circuit d'alimentation 49 et un circuit de sécurité 50.

Les interfaces de communication série 47, qui sont par exemple au standard RS 422, sont susceptibles de communiquer de façon bidirectionnelle avec le bloc électronique 4. Les circuits d'interface 48 sont de type parallèle et permettent, entre autres, de lire l'adresse et les codes des chargeurs 11 et de fournir des commandes de test et de mise à feu des cartouches.

Les unités centrales 46 sont organisées chacune autour d'un microprocesseur 51 tel que le microprocesseur MOTOROLA-16bits 68008, identique à celui de l'unité centrale 36. A chaque microprocesseur 51 sont associés :

— une mémoire ROM 52 (par exemple de type EPROM) recevant le programme opérationnel du boîtier de gestion et de distribution,

— une mémoire RAM 53 destinée à recevoir des tables temporaires de travail du programme opérationnel,

— une mémoire EEPROM 54 destinée à mémoriser les paramètres essentiels au traitement transférés depuis le MIP via le poste de commande ;

— une interface de communication série 55,

— un circuit de temporisation programmable 56 permettant de contrôler les cadences de tir,

— un chien de garde 57 indiquant les dépassements éventuels des temps de traitement impartis, et

— une horloge 58.

Chaque circuit de sécurité 50 permet de contrôler l'état du boîtier de gestion et de distribution en cours de fonctionnement. Il comprend, entre autres, un certain nombre de relais connectés en série qui sont commandés, notamment, en fonction de la position de la palette aérodynamique 15 et des auto-tests effectués par le boîtier de gestion et de distribution. La mise en service du dispositif et l'application aux différents modules électroniques de puissance 10 de la puissance électrique délivrée par la ou les sources d'alimentation 5 de l'aéronef sont donc autorisées ou inhibées par les circuits de sécurité 50.

Le lecteur 21 et le module d'insertion de paramètres 23 sont des sous-ensembles classiques qu'il n'y a pas lieu de décrire ici en détail.

On se reportera maintenant à la figure 3 sur laquelle apparaissent les liaisons des modules de puissance 10 avec les chargeurs et avec le circuit d'interface 48 du boîtier de gestion et de distribution. Le schéma de la figure 3 et la description qui en sera faite s'appliquent aussi bien au lance-leurres gauche 2G qu'au lance-leurres droit 2D.

Comme représenté sur la figure 1, on supposera que chaque lance-leurres comporte sept emplacements dont le premier 91 et le dernier 97 ont été représentés sur la figure 3. Toutefois, dans ce mode préféré de réalisation, chaque emplacement 9 comporte deux modules de puissance 10 et peut recevoir indifféremment deux chargeurs simples ou un chargeur double. Un chargeur double se présente comme la réunion en une même unité de deux chargeurs simples du même modèle et comporte deux connecteurs 12 et deux bouchons d'identification Id.

A chaque emplacement 9 sont associées $n$ voies de tir, $n$ étant le nombre maximal d'amorces de cartouches que peuvent contenir un chargeur double ou deux chargeurs simples. L'un des modules de chaque emplacement 9, appelé module impair 10I, comporte les voies de puissance impaires pour la mise à feu des amorces des cartouches contenues dans le chargeur impair 11I (ou la partie impaire d'un chargeur double). L'autre module pair 10P comporte les voies de puissance paires pour la mise à feu des amorces des cartouches contenues dans le chargeur pair 11P (ou la partie paire d'un chargeur double).

La distinction entre chargeurs simples et chargeurs doubles n'a pas d'incidence du point de vue de l'adressage des voies de tir. Dans la suite, le terme chargeur désignera donc, soit un chargeur simple, soit une moitié de chargeur double. L'intérêt de ce dédoublement des modules de puissance et des chargeurs à chaque emplacement réside dans la possibilité de multiplier les combinaisons de chargement en cartouches, car à un même emplacement 9, les chargeurs pair et impair pourront être équipés de cartouches de deux types différents, chacun d'eux ayant un chargement homogène. Par ailleurs, un chargeur peut contenir un nombre de cartouches inférieur à celui des voies de tir du module de puissance correspondant, soit que son chargement est incomplet, soit qu'il est d'un modèle pour cartouches de plus grandes dimensions.

Le circuit d'interface 48 de chaque boîtier de gestion et de distribution comporte des sorties SM1, SM2.....SM13, SM14 en nombre égal au nombre total de chargeurs que peut contenir le lance-leurres. Chacune de ces sorties est connectée à l'un des modules de mise à feu 10I et 10P et au bouchon de codage correspondant Id. C'est ainsi que la sortie SM1 est connectée au module 10I de l'emplacement 9I et au bouchon de codage Id1. La sortie SM2 est connectée au module 10P de l'emplacement 9I et au bouchon de codage Id2, et ainsi de suite.

La sélection des chargeurs pairs et impairs est effectuée au moyen de signaux SIM et SPM respectivement élaborés par le boîtier de gestion et de distribution et appliqués à la sortie appropriée SMj du circuit d'interface 48.

Par ailleurs, la sélection de l'une des douze voies de chacun des modules de mise à feu 10I et 10P est effectuée au moyen d'une liaison à douze conducteurs SV1.....SV12 connectés respectivement à des sorties CV1.....CV12 du circuit d'interface 48. Chacune des sorties CVj est connectée en parallèle par le conducteur SVj à chacune des voies de puissance de rang j de tous les modules électroniques de puissance.

Le circuit d'interface 48 comporte également six entrées REC1.....REC6 connectées en parallèle au six sorties de chacun des bouchons de codage Id1.....Id14 par des conducteurs LC1 à LC6 respectivement.

Enfin, les voies impaires de chaque module impair 10I sont connectées aux différentes amorces de cartouches du chargeur impair correspondant 11I par une liaison à douze conducteurs MAF1....MAF23 et, de même, les voies paires de chaque module 10P sont connectées aux différentes amorces de cartouches d'un chargeur pair 11P par une liaison à douze conducteurs MAF2.....MAF24.

Il résulte de ce qui précède que la sélection de l'une parmi toutes les cartouches contenues dans un lance-leurres peut être effectuée par l'adressage simultané de l'un des modules sur l'une des sorties SMj et de l'une des voies sur l'une des sorties CVi. Plus précisément, cet adressage permettra de sélectionner une amorce d'une cartouche. Suivant les cas, une cartouche peut comporter une ou deux amorces. C'est ainsi qu'un logement de chargeurs peut contenir deux cartouches à une seule amorce qui pourront être tirées l'une après l'autre. Il peut contenir également une seule cartouche à deux amorces ayant ou non la même fonction : les deux amorces peuvent par exemple présenter des retards différents, ou bien l'une des amorces peut être active afin de provoquer le tir avec mise à feu de la cartouche et l'autre inactive pour commander l'éjection sans mise à feu de la cartouche.

Les caractéristiques des cartouches et amorces dont est équipé un chargeur sont identifiées par son bouchon de codage Id. La lecture du code représenté par un bouchon de codage Id est obtenue en adressant ce bouchon par la sortie appropriée SMj de l'interface 48. Ce code est représenté par l'état des signaux présents sur les six entrées REC1 à REC6 de l'interface 48 en réponse à cet adressage.

La figure 4 est un schéma électrique plus détaillé du circuit de puissance et d'adressage des chargeurs pair et impair à un emplacement 9. Les mêmes références que celles utilisées sur la figure 3 ont été conservées. Chacun des modules 10I et 10P comprend un nombre d'amplificateurs de puissance 60 égal à celui des voies de mise à feu. De préférence, ces amplificateurs de puissance 60 sont réalisés en circuits hybrides. Ils sont alimentés à partir de la source d'alimentation 5 de l'aéronef par l'intermédiaire de l'organe de sécurité 15 et du circuit de sécurité 50 qui permet d'appliquer aux amorces des cartouches une tension électrique de mise à feu ou une tension inférieure de test qui permettra, par mesure d'impédance, de valider ou non cette amorce.

A chaque amplificateur de puissance 60 est associée une porte ET 61 dont la sortie attaque l'entrée de l'amplificateur. Les douze portes ET 61 du module impair 10I sont connectées par l'une de leurs deux entrées aux sorties CV1 à CV12 de l'interface 48 par les conducteurs SV1 à SV12 respectivement. De même, les douze portes ET 61 de l'autre module de puissance 10P ont l'une de leurs entrées connectée à l'une des sorties CV1 à CV12 de l'interface 48. Les autres entrées de toutes les portes ET 61 du module impair 10I sont connectées en parallèle à la sortie SM de l'interface dont le numéro d'ordre j est celui du module de puissance considéré. Les autres entrées de toutes les portes ET 61 appartenant au module pair 10P sont connectées en parallèle à l'entrée SM de l'interface de numéro d'ordre j + 1.

La sortie SMj est connectée à l'entrée du bouchon de codage Idj et la sortie SMj + 1 est connectée à l'entrée du bouchon de codage Idj + 1. Enfin, les six sorties de chacun des bouchons de codage sont connectées chacune à l'entrée respective REC1 à REC6 par l'intermédiaire d'une diode 62. La lecture du code d'identification du chargeur 11Ij est effectuée en appliquant un signal approprié à la seule sortie SMj de l'interface 48. Le code d'identification est représenté par la configuration des interconnexions existant entre l'entrée et les sorties du bouchon de codage Idj. C'est ainsi que l'entrée REC1 présentera l'un ou l'autre de deux états différents suivant que la diode 62 disposée dans la liaison LC1 est ou non connectée à la sortie SMj par l'intermédiaire du circuit d'interconnexion du bouchon de codage Idj. De la même manière, la lecture du code d'identification du chargeur 11P se fera par application d'un signal à la seule sortie SMj + 1 de l'interface 48.

La sélection de l'une quelconque des douze voies de mise à feu d'un chargeur, par exemple de la voie MAF4 du chargeur 11P, sera assurée par l'application d'un signal de niveau logique 1 aux sorties CV2 et SMj + 1 de l'interface 48. La sortie de la porte ET 61 correspondante passe alors au niveau logique 1 et l'amplificateur de puissance 60 de la voie MAF4 applique la puissance électrique du circuit d'alimentation (+ ALIM et – ALIM) à l'amorce de cartouche connectée à la liaison de mise à feu MAF4.

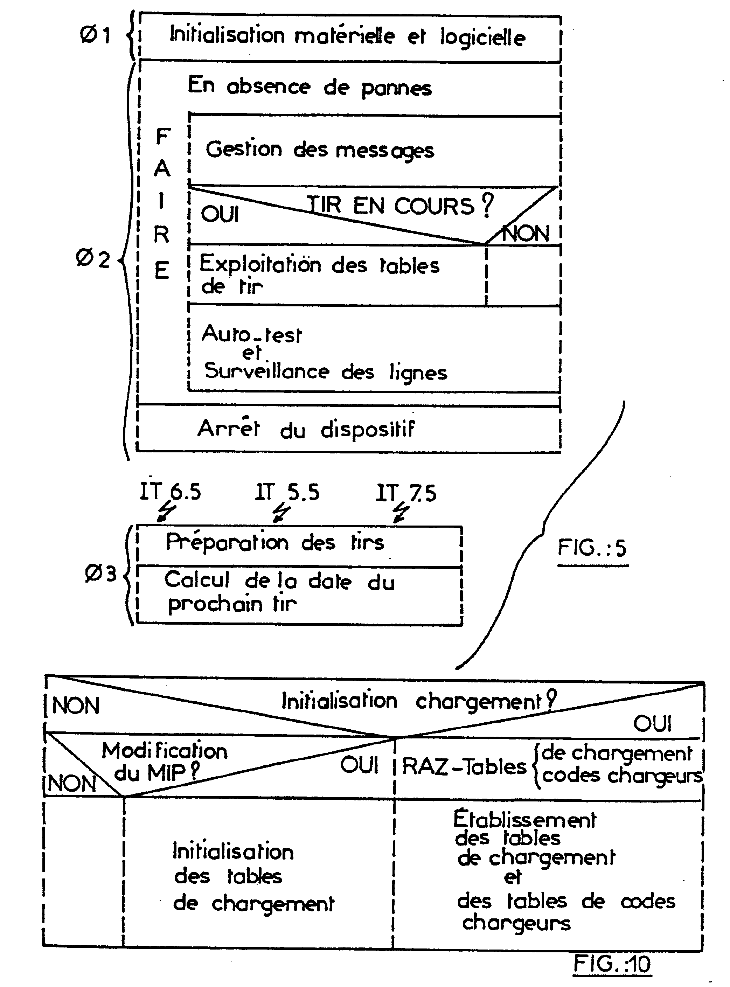

Après avoir décrit jusqu'à présent la structure matérielle du dispositif suivant l'invention, on procèdera maintenant à la description de son fonctionnement général en se référant également aux figures 5 à 10.

Les logiciels implantés dans la partie électronique du dispositif se répartissent entre les trois sous-ensembles que constituent le lecteur 21 du module d'insertion de paramètres (MIP), le poste de commande 1 et les boîtiers 17G et 17D de gestion et de distribution des ordres de tir.

Deux phases de fonctionnement de ces logiciels peuvent être dégagées indépendemment de leur implantation sur les matériels, à savoir :
— une phase "EN SECURITE" généralement rencontrée lorsque l'avion est au sol et au cours de laquelle les ordres de tir sont inhibés,
— une phase "HORS SECURITE" qui caractérise le dispositif en vol et autorise les tirs dans l'un des trois modes offerts au pilote. Ces modes peuvent être manuel, automatique, ou en séquence vide-vite comme cela sera expliqué plus en détail ci-après.

A la mise sous tension du dispositif, celui-ci se trouve en position "EN SECURITE" et le poste de commande 1 effectue son auto-test global, s'assure que les boîtiers de gestion et de distribution 17G et 17D fonctionnement correctement et sont en position "EN SECURITE", et contrôle si le module d'insertion de paramètres associé au lecteur 21 de MIP est présent ou non.

Si le MIP est présent, le poste de commande 1 assure la réception et le contrôle des messages lus et émis depuis le MIP par le lecteur 21 de MIP. Ces informations comprennent :
— la table des séquences de tirs qui sera stockée et exploitée par le poste de commande,
— les tables d'affectation des codes chargeurs et les tables de référence des chargeurs qui ont été préalablement chargés par le personnel dans les lance-leurres droite 2D et gauche 2G.

Ces tables sont ensuite toutes transférées vers les boîtiers de gestion et de distribution pour y être traitées.

De leur côté, les boîtiers de gestion et de distribution lisent les codes des chargeurs qui ont été embarqués sur l'aéronef et reconstruisent leurs tables descriptives de l'implantation des cartouches et ce, pour chaque type de cartouches. On supposera dans la suite que les chargeurs peuvent être équipés avec l'un parmi les trois types de cartouches A, B et C précités.

Les boîtiers de gestion et de distribution s'assurent ensuite de la compatibilité entre les codes chargeurs contenus dans les tables qui leur ont été transmises par le poste de commande et les codes chargeurs contenus dans les tables d'implantation reconstituées à la phase précédente.

En cas d'absence du MIP, les tâches suivantes sont exécutées :
— les informations en place, tant au niveau du poste de commande 1 que des boîtiers de gestion et de distribution 17G et 17D et concernant respectivement la table des séquences de tir et les tables d'affectation des codes chargeurs et de référence des chargeurs sont maintenues telles quelles,
— les boîtiers de gestion et de distribution s'assurent de la compatibilité entre les codes des chargeurs contenus dans les tables maintenues telles quelles et les codes lus sur les bouchons de codage des chargeurs qui ont été embarqués et, si nécessaire, conduisent des corrections éventuelles sur les tables. Les boîtiers de gestion et de distribution transfèrent vers le poste de commande les informations relatives aux cartouches en place et à leur état de fonctionnement, et ceci type par type de cartouche.

En tâche de fond, le poste de commande 1 et les boîtiers de gestion et de distribution 17G et 17D effectuent des auto-tests, ainsi que le contrôle du fonctionnement des lignes de dialogue entre le poste de commande et les boîtiers de gestion et de distribution. En outre, le poste de commande vérifie également le fonctionnement des liaisons séries avec l'organe de décision externe 7 et le lecteur 21 de MIP en cas de mise en oeuvre de ces dernières.

Le passage en phase "HORS SECURITE" est réalisé, lorsque l'aéronef est en vol, par l'activation du système d'arme de l'aéronef par le pilote qui met en circuit la source d'alimentation électrique 15 et par le basculement en position repliée de la palette aérodynamique à partir d'une vitesse prédéterminée. En cas d'initialisation préalable au sol au moyen du MIP, lors d'un renouvellement de la charge emportée par les lance-leurres, les boîtiers de gestion et de distribution conduisent des tests sur les amorces de cartouches et envoient le cas échéant les informations correspondant au décomptage des cartouches non valides en cas d'avarie parmi les cartouches embarquées.

Pendant cette phase "HORS SECURITE", les boîtiers de gestion et de distribution et le poste de commande exécutent en tâche de fond leur auto-contrôle, mais ils peuvent en outre conduire des séquences de tir dès qu'il y a demande et sous réserve de disponibilité dans le type de cartouches choisi par la séquence sélectionnée.

On a représenté sur la figure 5 la structure générale du programme du poste de commande 1. Ce programme de traitement opérationnel comprend trois parties essentielles, à savoir :

— une phase d'initialisation Ø1 qui prépare les différentes variables de traitement et assure l'initialisation du matériel, accompagnée éventuellement d'une mise à jour des séquences de tir et du nombre de cartouches disponibles dans chaque type ;

— une boucle infinie de traitement Ø2 organisée autour d'un noyau d'auto-contrôle des éléments constitutifs du poste de commande (mémoire RAM 40, mémoire ROM 39, mémoire EEPROM 41, liaisons série, etc.....) et de surveillance des lignes arrivant sur les ports parallèles de l'interface 37 (figure 2),

— une phase Ø3 de préparation et calcul des tirs dans laquelle on rentre depuis la phase Ø2 lorsque survient l'une des interruptions de demandes de tir suivantes :

— interruption IT5.5 pour le tir manuel,

— interruption IT6.5 pour une demande de tir automatique,

— interruption IT7.5 pour une demande de tir en mode vide-vite.

En cas de demande de tir, outre les tests cités précédemment dans la phase Ø2, le programme assure à chaque tour de boucle, si nécessaire, l'exploitation de tables de tir. Le cas échéant, cette exploitation consiste à émettre des messages de tir vers les boîtiers de gestion et de distribution et à remettre à jour les tables exploitées comme cela sera expliqué dans la suite.

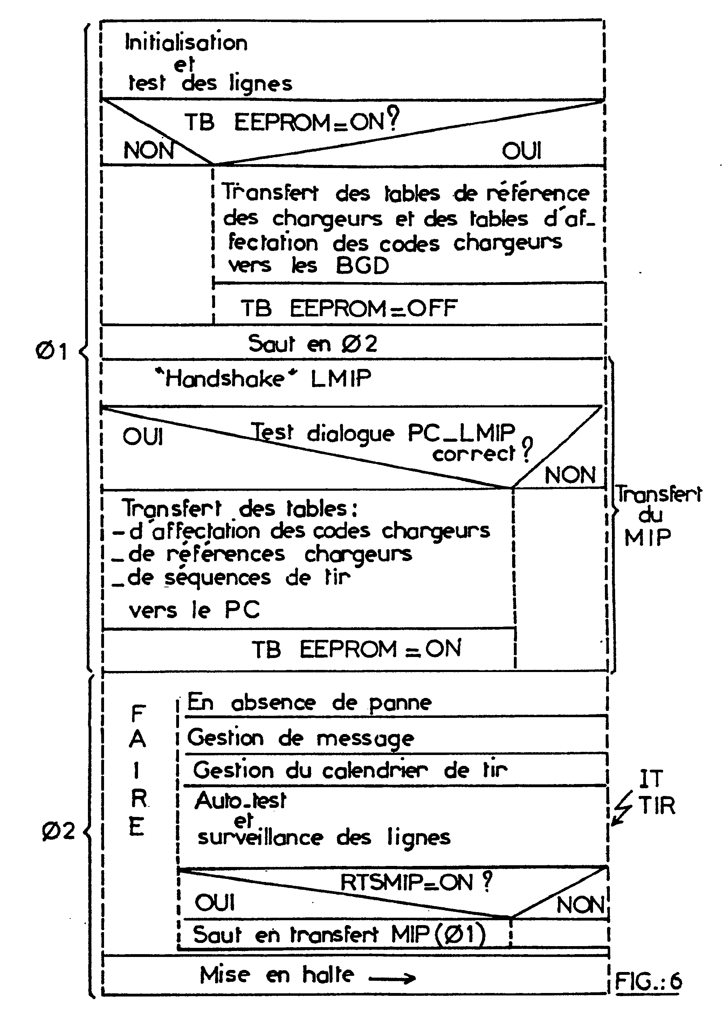

On se reportera maintenant à la figure 6 où les phases Ø1 et Ø2 ont été représentées de manière plus détaillée.

La première étape de la phase Ø1 consiste en l'initialisation précitée du matériel et du logiciel, un contrôle des mémoires RAM 40, ROM 39 et EEPROM 41, et un contrôle des lignes de dialogues avec les boîtiers de gestion et de distribution 17G et 17D et avec l'organe de décision externe 7.

L'étape suivante est un test sur un indicateur (TB EEPROM = ON) dont l'état indique si de nouvelles tables descriptives ont été ou non chargées depuis le MIP dans le poste de commande 1. Dans l'hypothèse où le dispositif vient d'être mis sous tension et où de nouvelles tables n'ont pas encore été chargées, la réponse à ce test est négative et l'on passe directement à l'étape intitulée "saut en Ø2".

On passe alors à la première étape de la phase Ø2 où le poste de commande s'assure que le dispositif ne présente pas de panne. En cas de panne, le programme passe à la dernière étape de la phase Ø2 intitulée "mise en halte" et le voyant 30 du poste 1 s'allume.

Si aucune panne n'est détectée, les étapes suivantes (qui seront examinées ci-après) de la phase Ø2 du programme sont exécutées et l'on parvient au test RTSMIP = ON ?. Ce test a pour objet de déterminer si le MIP demande l'autorisation d'envoyer des données au poste de commande 1.

Si la réponse à ce test est positive, l'étape suivante de la phase Ø2 se traduit par un saut au sous-programme de transfert du MIP de la phase Ø1.

La première étape de ce sous-programme intitulée "HANDSHAKE" LMIP est une phase de reconnaissance mutuelle du lecteur 21 et du poste de commande 1. L'étape suivante est un test destiné à assurer que le dialogue entre le poste de commande et le lecteur 21 de MIP est correct. Si tel n'est pas le cas, on passe directement à la première étape de la phase Ø2 et la séquence d'opérations décrite précédemment se répète.

Si le dialogue entre le poste de commande et le lecteur 21 de MIP s'effectue correctement, les tables d'affectation des codes chargeurs, de référence des chargeurs et de séquences de tir sont transférées du MIP vers le poste de commande 1.

Chaque chargeur simple ou moitié de chargeur double mis en place dans le lance-leurres est caractérisé par un code chargeur. Le boîtier de gestion et de distribution lit ces codes chargeurs en venant adresser successivement tous les modules de puissance du lance-leurres. Pour la simplicité de la description, on assimilera dans la suite une moitié de chargeur double à un chargeur simple.

A chaque code chargeur possible est associée une table d'affectation des codes chargeurs. Les tables d'affectation contenues dans le MIP sont donc préparées en fonction des chargeurs qui seront embarqués sur l'aéronef. Ce chargement est lui-même fonction de la mission à remplir.

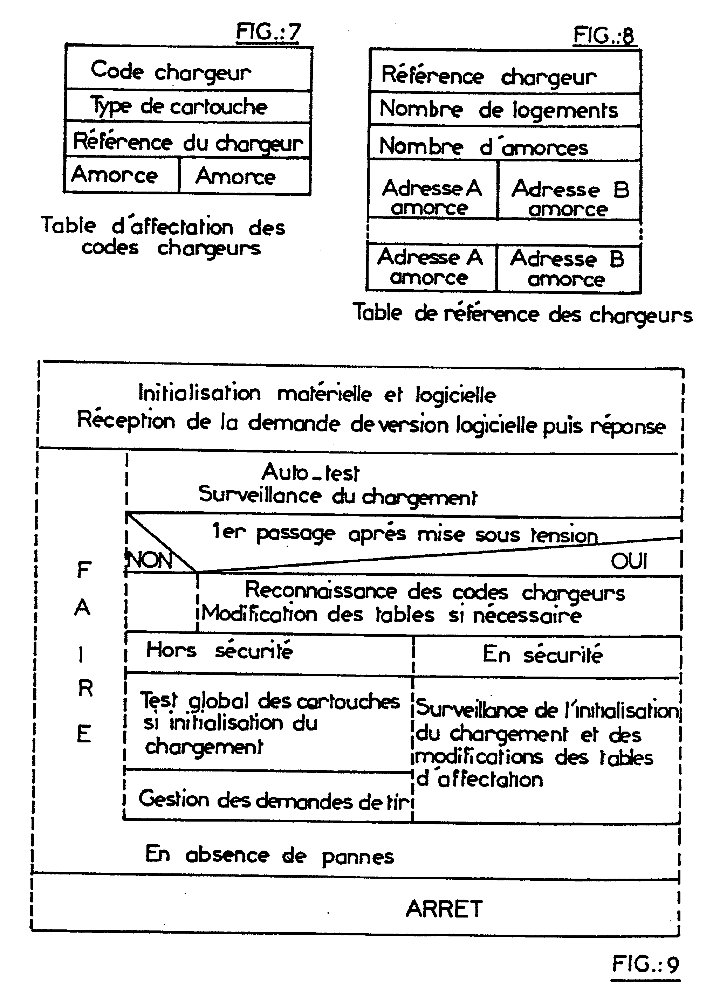

Comme représenté à la figure 7, chaque table d'affectation des codes chargeurs donne dans l'ordre :

— le code chargeur,

— le type de cartouches contenues dans les chargeurs affectés de ce code, à savoir type A, B ou C,

— la référence du modèle de chargeur affecté de ce code, cette référence étant fonction du nombre de cartouches contenues dans les chargeurs et du nombre d'amorces (une ou deux) de chaque cartouche, et

— le code amorce qui définit les caractéristiques de la ou chaque amorce.

Par ailleurs, à chaque modèle de chargeur identifié dans les tables d'affectation des codes chargeurs est associée une table de référence des chargeurs. Un telle table est représentée à la figure 8 et fournit une description de la disposition physique des différentes amorces dans le chargeur simple identifié. Ces tables de référence des chargeurs donnent dans l'ordre :

— la référence du modèle de chargeur considéré ;

— le nombre de logements de cartouches exploitable dans le chargeur identifié ;

— le nombre d'amorces possibles sur chaque cartouche ;

— l'adresse, c'est-à-dire le numéro de voie de tir, de chaque amorce, sachant que suivant les cas une cartouche peut comporter une ou deux amorces.

Revenant maintenant à la figure 6, une fois que toutes les tables ont été transférées du MIP au poste de commande, le programme passe à l'étape suivante où l'indicateur de stockage de nouvelles tables descriptives est positionné à ON (TB EEPROM = ON).

Le programme reboucle alors sur le premier test de la phase $\emptyset$1 et la réponse à ce test est bien entendu positive.

Dans ces conditions, le poste de commande 1 assure le transfert des tables de référence des chargeurs et des tables d'affectation des codes chargeurs vers les boîtiers de gestion et de distribution 17G et 17D.

Lorsque ce transfert est achevé, l'indicateur de stockage des nouvelles tables descriptives dans le poste de commande (TB EEPROM) est positionné à OFF et l'on passe ensuite directement à la phase $\emptyset$2 du programme.

Si l'on suppose maintenant que le poste de commande ne détecte aucune panne du dispositif, on va passer à la première étape "gestion de message" de la boucle infinie du programme $\emptyset$2.

De par sa situation au sein du sous-ensemble électronique, le poste de commande 1 est en quelque sorte un carrefour de communication et d'échange et doit en conséquence assurer la gestion des messages. De fait, il possède une position de maître au sein de la configuration comprenant le boîtier de gestion et de distribution gauche 17G, le boîtier de gestion et de distribution droit 17D, l'organe de décision externe 7 et le lecteur 21 de MIP qui, eux, sont en position d'esclaves en matière de communication et d'échange.

Le poste de commande contrôle donc les échanges avec tous les périphériques qui, étant esclaves, sont à l'écoute de celui-ci. Le poste de commande peut, sans préalable, envoyer un message vers l'un quelconque des périphériques. Par contre ces derniers devront faire une requête de dialogue au poste de commande et attendre son autorisation d'émettre avant tout envoi de données vers celui-ci. A l'issue de leur émission, ils préviennent le poste de commande que celle-ci est terminée, en conséquence de quoi ce dernier interdit à nouveau toute émission de message à son interlocuteur. Comme dans toute procédure de communication, une "poignée de mains" ("HANDSHAKE") permet d'initialiser et de terminer un échange entre un récepteur et un émetteur de données.

L'étape suivante du programme de la figure 6, intitulée gestion du calendrier de tir, consiste à examiner si un tir est en cours.

Dans la négative, le programme passe directement à une étape où le poste de commande procède à un auto-contrôle matériel et logiciel et procède à une surveillance de ses lignes de communication avec les périphériques.

L'étape suivante est le test RTSMIP = ON ?, auquel la réponse est alors négative. Le programme reboucle alors à la première étape de la phase $\emptyset$2.

Si, par contre, il apparaît à l'étape "gestion du calendrier de tir" qu'un tir est en cours, le poste de commande 1 procède à une exploitation des tables de tir. Ces tables de tir ont été préparées à la phase $\emptyset$3 en réponse à une interruption IT6.5, IT5.5 ou IT7.5. Suivant la nature de cette interruption, le tir aura été préparé en mode manuel, automatique ou vide-vite.

Les tables de tir construites par le poste de commande seront différentes suivant le mode retenu. Ces tables seront construites en fonction des tables de séquences de tir chargées initialement dans le poste de commande à partir du MIP et du contenu en cartouches des chargeurs embarqués. Ce contenu est constamment tenu à jour par les boîtiers de gestion et de distribution sous forme de tables de chargement pour chaque type de cartouches A, B et C. Chaque séquence de tir mémorisée dans la mémoire 41 du boîtier de commande comprend plusieurs sous-séquences propres chacune à un type de cartouches, chaque sous-séquence exploitant une table de chargement décrite ci-après. Chaque sous-séquence de tir est décrite par :

— le niveau de priorité de la sous-séquence

— le type de cartouches concernées

— le type de l'amorce sélectionnée

— le retard de tir de la première cartouche,

— le mode de tir des cartouches qui peut être régulier ou non.

Le tir d'une cartouche est déclenché par le boîtier de gestion et de distribution correspondant et celui-ci en effectue le décompte. Après chaque tir, le poste de commande calcule la date du prochain tir. Cette date est fonction d'une temporisation fixée par la séquence de tir retenue.

Dans le fonctionnement en mode manuel, la séquence de tir est choisie par le pilote à l'aide de la clé 32 et le tir est déclenché au moyen d'un poussoir 6. En mode automatique, la séquence de tir est déterminée et déclenchée automatiquement par le poste de commande 1 en fonction des informations reçues de l'organe de décision externe 7. Enfin, comme son nom l'indique, en mode vide-vite toutes les cartouches d'un ou plusieurs types sont éjectées par les boîtiers de gestion et de distribution. Le déclenchement du tir en mode vide-vite est commandé manuellement par le pilote et la commande est véhiculée par une liaison directe 23 (figure 2) entre le tableau de commande 3, le bloc électronique 4 et les boîtiers de gestion et de distribution 17G et 17D.

Le programme de traitement opérationnel implanté sur les boîtiers de gestion et de distribution possède une structure générale identique à celle du poste de commande. Cette structure générale est représentée à la figure 9.

A la mise sous tension, chaque boîtier de gestion et de distribution effectue une initialisation matérielle et logicielle et fait au poste de commande une demande de version logicielle.

Si le dialogue effectué avec le poste de commande fait apparaître qu'il n'y a pas d'incompatibilité logicielle entre le boîtier de gestion et de distribution et le poste de commande, le programme passe à la première étape de la boucle infinie de traitement qui consiste en un auto-contrôle de ses éléments et en une surveillance des lignes de communication du boîtier de gestion et de distribution. La boucle infinie du programme est interrompue en cas d'anomalie. Le boîtier de gestion et de distribution effectue également une surveillance du chargement en cartouches du lance-leurres auquel il est associé.

L'étape suivante est un test pour déterminer si la boucle infinie en est à son premier passage après la mise sous tension.

Dans l'affirmative, le boîtier de gestion et de distribution effectue une reconnaissance des chargeurs pour vérifier que ceux-ci n'ont pas été modifiés.

Pour mieux comprendre ce qui va suivre, il doit être noté que les tables suivantes sont sauvegardées dans la mémoire EEPROM du boîtier de gestion et de distribution :

— la table de référence des chargeurs transférée du MIP vers le boîtier de gestion et de distribution par l'intermédiaire du poste de commande ;

— la table d'affectation des codes chargeurs également transférée depuis le MIP par l'intermédiaire du poste de commande ;

— une table répertoire des codes chargeurs autorisés par le MIP et qui contient la liste des codes chargeurs figurant dans les tables d'affectation des codes chargeurs. En cas de modification d'une table d'affectation lors d'un transfert des tables du MIP, la table répertoire est remise à jour comme on le verra ci-après ;

— une table des codes chargeurs qui établit une correspondance entre le code chargeur et un chargeur. A tout instant, le boîtier de gestion et de distribution dispose ainsi d'une information sur l'emplacement des chargeurs et leur contenu.

Dans le cas d'un chargeur manquant ou d'un chargeur dont le code chargeur n'est pas reconnu dans la table répertoire des codes chargeurs, le code correspondant à ce chargeur sera mis arbitrairement à 0 ;

— des tables de chargement construites à partir des tables ci-dessus et qui contiennent toutes les informations nécessaires à l'exécution d'un tir. Il existe autant de tables de chargement par boîtier de gestion et de distribution que le lanceur correspondant contient de types différents A, B ou C de cartouches. La structure de chaque table de chargement est identique quel que soit le type de cartouches et le nombre d'amorces utilisées. Chaque table de chargement est composée de tables élémentaires contenant chacune l'état et l'adresse de chacune des amorces d'une cartouche. La taille d'une table de chargement dépend du nombre de chargeurs contenant le même type de cartouches et de la contenance de chacun de ces chargeurs. La construction d'une table de chargement est faite chargeur par chargeur, à partir de la table des codes chargeurs et des tables transmises par le MIP. Les chargeurs les plus éloignés du centre de gravité du lance-leurres figurent en tête de la table de chargement afin de préserver l'équilibre des masses ;

— une table des quantités de cartouches qui, lors d'une coupure d'alimentation, permet d'informer le poste de commande des quantités disponibles dans chacun des trois types de cartouches A, B et C.

Revenant à la figure 9, en cas de réponse positive au test de premier passage après mise sous tension, le boîtier de gestion et de distribution effectue sur chaque chargeur la lecture du code et le compare avec le code correspondant stocké dans la table des codes chargeurs. Le nouveau code chargeur ne sera validé qu'à deux conditions :

— les deux codes sont identiques,

— le code chargeur est présent dans la table répertoire des codes chargeurs définie ci-dessus.

Si le code chargeur est validé, l'adresse (sélection du module SMi et sélection de la voie CVj) et les données indiquant l'état de chaque cartouche demeurent inchangés dans la table de chargement correspondante.

Si le code chargeur est invalidé, le boîtier de gestion et de distribution met ce code chargeur à 0 dans la table des codes chargeurs. Il invalide les cartouches de ce chargeur en mettant leurs données d'état à 0 dans la table de chargement correspondante. Ces cartouches sont également décomptées de la table des quantités de cartouches.

Dans le cas où le code chargeur précédent était invalide, ces opérations n'ont pas lieu d'être car les caractéristiques du chargeur ne figurent pas dans la table de chargement correspondante.

A l'étape suivante, le boîtier de gestion et de distribution détermine si le lance-leurres se trouve en position "EN SECURITE" ou "HORS SECURITE". On rappellera que cet état dépend de la position de la palette aérodynamique. Supposant que l'aéronef se trouve au sol, le lance-leurres est alors en position "EN SECURITE".

Dès lors, le programme passe à un sous-programme de surveillance de l'initialisation du chargement et de modification des tables d'affectation représenté plus en détail à la figure 10.

Ce sous-programme commence par un test permettant de déterminer si l'on est dans une situation d'initialisation du chargement. Cette initialisation est déclenchée par un opérateur qui appuie sur le bouton-poussoir 20 situé dans le lance-leurres correspondant lorsque la mise en place des chargeurs est achevée.

Si le bouton 20 a été actionné, la réponse au test précité est positive et le boîtier de gestion et de distribution passe à une étape de remise à zéro des tables des codes chargeurs et des tables de chargement.

Le boîtier de gestion et de distribution effectue ensuite une nouvelle reconnaissance des chargeurs. Sur chaque chargeur, il effectue la lecture du code chargeur. Le nouveau code chargeur ne sera validé que s'il est présent dans la table répertoire des codes chargeurs. Si le code chargeur est validé, le boîtier de gestion et de distribution le stocke dans la table des codes chargeurs. Il complète ensuite la table de chargement correspondante en stockant l'adresse et l'état de chaque cartouche, et ceci pour toutes les cartouches d'un chargeur.

Les cartouches étant considérées comme bonnes lors d'un renouvellement des chargeurs, le boîtier de gestion et de distribution comptabilise les cartouches de chaque chargeur valide, effectue la somme des quantités de cartouches pour chaque type et stocke ces valeurs dans sa table de quantité de cartouches.

Si le code chargeur est invalide, on stocke une information appropriée dans la table des codes chargeurs à l'emplacement correspondant au chargeur testé.

Lorsque l'établissement des tables de chargement et des tables de codes chargeurs est achevé, on revient alors à la première étape du programme principal de la figure 9, au test de premier passage après mise sous tension auquel la réponse est alors négative et, tant que l'on est "EN SECURITE", au sous-programme de la figure 10. La réponse au test d'initialisation du chargement est maintenant négative.

Il est alors procédé à un test pour déterminer si les tables d'affectation en provenance du MIP par l'intermédiaire du poste de commande ont été modifiées.

Si tel est le cas, et puisque l'initialisation du chargement a eu lieu, le boîtier de gestion et de distribution effectue, par référence à la nouvelle table répertoire des codes chargeurs, une nouvelle initialisation de sa table de chargement.

Le programme reboucle ensuite indéfiniment par les réponses négatives aux tests des figures 9 et 10 tant que l'on est en position "EN SECURITE".

Lorsque l'aéronef est en vol et que la palette aérodynamique est repliée en position "VOL", le programme principal peut passer à l'étape "HORS SECURITE" qui autorise le boîtier de gestion et de distribution à procéder à un test global des cartouches s'il est détecté qu'une initialisation du chargement du lance-leurres a eu lieu.

Quand ces opérations d'initialisation et de test des cartouches sont terminées, le boîtier de gestion et de distribution est prêt à tout moment à tirer une cartouche d'un des trois types en activant l'une ou l'autre des amorces.

Le boîtier de gestion et de distribution effectue un tir dès qu'il a validé la réception d'un message de tir en provenance du poste de commande. Ce message peut être émis à tout moment sans information préalable du poste de commande. Par contre, le boîtier de gestion et de distribution sera informé de la fin d'une séquence de tir par un message. Il faudra alors soit activer les amorces secondaires en cas de tir de l'amorce primaire, soit éjecter les cartouches comportant une amorce de détresse si l'amorce activée correspondante est défectueuse.

Les cartouches tirées seront décomptées des tables de chargement et l'information correspondante sera transmise au boîtier de commande pour la mise à jour de l'affichage du nombre de cartouches disponibles dans chaque type.

En dehors de ces phases de gestion des demandes de tir, le boîtier de gestion et de distribution effectue en permanence ces tâches de fond que sont les auto-contrôles et la surveillance du chargement du lance-leurres.

Il va de soi que les modes de réalisation décrits ne sont que des exemples et l'on pourrait les modifier, notamment par substitution d'équivalents techniques, sans sortir pour cela du cadre de l'invention. C'est ainsi, par exemple, que le nombre de types de cartouches embarquées dans un lance-leurres n'est limité que par le nombre de chargeurs qu'il contient. D'autre part, bien que le boîtier de gestion et de distribution soit de préférence contenu dans le lance-leurres, ce qui a entre autre pour avantages de limiter la charge permanente de l'aéronef et de simplifier considérablement les connexions (simple liaison série entre chaque boîtier de gestion et de distribution et le poste de commande), ce boîtier pourrait être également embarqué sur l'aéronef. Enfin, on notera que le dispositif suivant l'invention est applicable à d'autres types d'appareils tels que, par exemple, les navires de surface.

**Revendications**

1. Dispositif de tir sélectif de munitions telles que des cartouches pour aéronef ou autre appareil, comprenant au moins un dispositif d'emport (2G, 2D) d'une pluralité de munitions d'un ou plusieurs types différents et des moyens électroniques pour commander sélectivement la mise à feu d'au moins une munition d'un type donné indépendamment de son emplacement dans le dispositif d'emport et actualiser des moyens de comptage des munitions de chaque type disponibles à bord de l'appareil, caractérisé en ce que :

a) le dispositif d'emport (2G, 2D) comporte, comme connu en soi :

— des moyens (9) de réception de plusieurs chargeurs modulaires (11) amovibles et interchangeables d'un ou plusieurs modèles, chargés chacun avec au moins un parmi plusieurs types de cartouches et comportant chacun un code d'identification fonction du modèle de chargeur et du type de cartouches dont il est équipé,

— au moins un module électronique (10) de mise à feu de cartouches associé à chaque chargeur (11),

et en ce que lesdits moyens électroniques comprennent :

b) un boîtier électronique (17G, 17D) de gestion du chargement et de distribution sélective des ordres de mise à feu associé à chaque dispositif d'emport et comportant une première mémoire programmable (54), dans laquelle sont stockés des premiers paramètres représentatifs des modèles de chargeurs et des types de cartouches autorisés, ledit boîtier électronique de gestion et de distribution étant apte à lire l'adresse et le code d'identification de chaque chargeur, à inventorier le chargement effectif dudit dispositif d'emport en cartouches des différents types, à valider type par type lesdites cartouches inventoriées en fonction desdits premiers paramètres stockés dans ladite première mémoire programmable (54), à commander sélectivement la distribution des ordres de mise à feu desdites cartouches validées, et à actualiser ledit inventaire du chargement en fonction desdites mises à feu, et

c) un boîtier électronique de commande (4) connecté à chaque boîtier électronique (17G, 17D) de gestion et de distribution et comportant des moyens (25-28) d'affichage d'informations sur l'état dudit dispositif de tir et une seconde mémoire programmable (41) adaptée pour être chargée avec lesdits premiers paramètres représentatifs des modèles de chargeurs et des types de cartouches autorisés et avec des seconds paramètres représentatifs de différentes séquences de tirs de cartouches d'un ou plusieurs types susceptibles d'être mises en oeuvre, ledit boîtier électronique de commande (4) étant apte à programmer lesdits premiers paramètres dans ladite première mémoire (54) programmable de chaque dispositif de gestion et de distribution (17G, 17D), à sélectionner l'une desdites séquences de tir en réponse à la réception d'un ordre de tir donné, à engendrer, par l'intermédiaire d'au moins un boîtier (17G, 17D) de gestion et de distribution, le tir d'une ou plusieurs cartouches d'un ou plusieurs types suivant ladite séquence sélectionnée, et à calculer, à partir d'informations fournies par lesdits boîtiers électroniques de gestion et de distribution (17G, 17D), le nombre de cartouches valides disponibles dans chaque type et afficher lesdits nombres sur lesdits moyens d'affichage (26-28).

2. Dispositif suivant la revendication 1, caractérisé en ce que le boîtier électronique de commande (4) est connecté à un organe de décision externe (7) et en ce que certaines au moins desdites séquences de tir sont sélectionnées par cet organe en fonction des caractéristiques de menaces détectées.

3. Dispositif selon la revendication 2, caractérisé en ce qu'il présente un sélecteur de mode (33) à commande manuelle, à savoir un mode de déclenchement automatique de séquence de tir par l'organe de décision externe (7) et un mode de déclenchement manuel, ainsi qu'un organe (32) de sélection d'une parmi plusieurs séquences de tir à déclenchement manuel.

4. Dispositif selon l'une quelconque des revendications 1 à 3, caractérisé en ce que lesdites mémoires programmables (41, 54) sont du type programmable et effaçable électriquement (EEPROM) et la seconde mémoire programmable est connectée par une liaison série (22) à un lecteur (21) de module d'insertion de paramètres.

5. Dispositif selon l'une quelconque des revendications 1 à 4, caractérisé en ce que le boîtier électronique de commande (4) est connecté à chaque boîtier (17G, 17D) de gestion et de distribution par une liaison série (19G, 19D).

6. Dispositif selon l'une quelconque des revendications 1 à 5, caractérisé en ce que chaque module de mise à feu (10) comporte des voies de mise à feu (MAF1.....MAF24) en nombre égal au nombre maximal d'amorces de cartouches dans un chargeur (11), et en ce que chaque amorce d'un chargeur (11) est adressable à partir du boîtier de gestion et de distribution par sélection du module et de la voie de mise à feu correspondants.

7. Dispositif selon la revendication 6, caractérisé en ce que chaque boîtier (17G, 17D) de gestion et de distribution comporte une interface (48) présentant une première série de sorties (SM1.....SM4) de sélection de module dont chacune est connectée à un module de mise à feu différent et une deuxième série de sorties de sélection de voies (CV1.....CV2) qui sont connectées chacune en parallèle aux voies de mise à feu homologues de tous les modules.

8. Dispositif selon la revendication 7, caractérisé en ce que chaque voie de mise à feu (MAF1.....MAF24) comporte un amplificateur de puissance (60) commandé par une porte ET (61), lesdites portes étant connectées indivisuellement par l'une de leurs entrées aux sorties de sélection de voies (CV1.....CV2) et collectivement par l'autre de leurs entrées à la sortie (SM1.....SM14) de sélection du module dont elles font partie.

9. Dispositif selon l'une quelconque des revendications 7 et 8, caractérisé en ce que chaque boîtier de gestion et de distribution (17G, 17D) comporte une série d'entrées (REC1.....REC6) de lecture des codes d'identification des chargeurs, qui sont connectées en parallèle aux moyens de codage (IdI.....Id14) des chargeurs, ledit boîtier (17G, 17D) commandant la lecture d'un code d'identification d'un chargeur par sélection du module de mise à feu correspondant.

10. Dispositif selon l'une quelconque des revendications 1 à 9, caractérisé en ce que chaque boîtier électronique (17G, 17D) de gestion et de distribution et le boîtier électronique de commande (4) comprennent un circuit d'alimentation (49 ; 35), des circuits d'interface (47, 48 ; 37) et une unité centrale (46 ; 36), ladite unité centrale comportant :

— un microprocesseur (51 ; 38),

— une mémoire morte (52 ; 39) qui contient le programme opérationnel de chaque boîtier,

— une mémoire vive de travail (53 ; 40),

— ladite mémoire programmable (54 ; 41),

— une interface de communication série programmable (55 ; 42),

— un circuit de temporisation programmable (56, 44) qui fixe la vitesse de transmission en liaison série,

— une horloge 43, et

— un chien de garde (45) qui contrôle les dépassements éventuels des durées de traitement et génère une alarme en cas de dépassement.

11. Dispositif selon l'une quelconque des revendications 1 à 10, caractérisé en ce que chaque dispositif d'emport de cartouches (2G, 2D) comprend une palette aérodynamique (15) commandant un contacteur interposé dans le circuit d'alimentation (16) des modules de mise à feu (10), ladite palette (15) étant susceptible de basculer, sous l'effet d'un vent relatif prédéterminé, d'une position inactive où les modules de puissance ne sont pas alimentés et le tir de cartouches est interdit jusqu'à une position active où les modules de puissance sont alimentés et le tir de cartouches est autorisé.

12. Dispositif selon les revendications 10 et 11, caractérisé en ce que chaque boîtier électronique (17G, 17D) de gestion et de distribution comprend un circuit de sécurité (50) adapté pour interdire audit boîtier de délivrer des ordres de tir et de test de cartouches lorsque ladite palette aérodynamique (15) est en position inactive.

13. Dispositif selon la revendication 12, caractérisé en ce qu'à chaque boîtier (17G, 17D) de gestion et de distribution est associé un bouton-poussoir (20) permettant audit boîtier (17G, 17D), consécutivement au chargement du dispositif d'emport (2G, 2D), de procéder à l'initialisation de son chargement.

14. Dispositif selon l'une quelconque des revendications 1 à 13, caractérisé en ce qu'il est adapté pour être équipé de cartouches de l'un au moins des types comprenant des cartouches à leurres électromagnétiques, des cartouches à leurres infrarouges et des cartouches de brouillage actives.

15. Procédé de tir sélectif de cartouches au moyen d'un dispositif selon l'une quelconque des revendications 1 à 14, suivant lequel chaque dispositif d'emport est équipé de chargeurs d'un ou plusieurs modèles, chargés chacun avec un parmi plusieurs types de cartouches donnés, choisis en fonction de la mission à remplir, caractérisé en ce que :

a) on introduit dans la seconde mémoire programmable (41) du boîtier de commande (4) lesdits paramètres représentatifs, d'une part des modèles de chargeurs et des types de cartouches autorisés, d'autre part des différentes séquences de tir susceptibles d'être mises en oeuvre,

b) on transfère dans la première mémoire programmable (54) de chaque boîtier (17G, 17D) de gestion et de distribution lesdits premiers paramètres représentatifs des modèles de chargeurs et des types de cartouches autorisés,

c) on active chaque dispositif d'emport (2G, 2D) pour permettre à chaque boîtier de gestion et de distribution de :

— lire le code d'identification et l'adresse de chaque chargeur embarqué ;

— comparer les codes chargeurs lus avec les codes chargeurs autorisés qui sont mémorisés dans ladite première mémoire programmable (54) consécutivement à ladite phase b) ; et

— valider les chargeurs dont le code est autorisé.

16. Procédé selon la revendication 15, caractérisé en ce que l'étape d'introduction des premiers paramètres représentatifs des modèles de chargeurs et des types de cartouches comprend le chargement dans la seconde mémoire programmable (41) du boîtier de commande (4) :

a) de tables d'affectation des codes chargeurs définissant pour chaque code chargeur :

— le type de cartouches utilisées,

— le modèle de chargeur concerné,

— le type d'amorce des cartouches,

b) de tables de référence des chargeurs définissant pour chaque modèle de chargeur :

— le nombre de logements de cartouches que contient le chargeur,

— le nombre d'amorces de chaque cartouche,

— le numéro de voie de chaque amorce.

17. Procédé selon la revendication 16, caractérisé en ce que, à partir des codes chargeurs lus et validés, des tables d'affectation des codes chargeurs et des tables de référence des chargeurs, chaque boîtier de gestion et de distribution (17G, 17D) construit, pour chaque type de cartouches, une table de chargement contenant autant de tables élémentaires qu'il existe de cartouches du type considéré, chaque table élémentaire contenant l'adresse et l'état de chaque amorce de chaque cartouche.

18. Procédé selon la revendication 17, caractérisé en ce que :

— chaque séquence de tir de cartouches mémorisée dans la seconde mémoire programmable (41) du boîtier de commande comprend plusieurs sous-séquences propres chacune à un type de cartouches, chaque sous-séquence exploitant une table de chargement étant décrite par :

— le niveau de priorité de la sous-séquence
— le type de cartouches concernées
— le type de l'amorce sélectionnée
— le retard de tir de la première cartouche,
— le mode de tir des cartouches qui peut être régulier ou non.

19. Procédé selon la revendication 18, caractérisé en ce que lesdites séquences de tir comprennent en outre une séquence vide-vite autorisant, sur commande manuelle, l'éjection immédiate de toutes les cartouches d'un ou plusieurs types prédéterminés.

20. Procédé selon l'une quelconque des revendications 18 et 19, caractérisé en ce que, lorsque ladite palette (15) est en position active, chaque boîtier (17G, 17D) de gestion et de distribution déroule un programme de test des amorces de chaque cartouche embarquée et décompte de la table de chargement les cartouches invalidées.

21. Procédé selon la revendication 20, caractérisé en ce que chaque boîtier de gestion et de distribution fournit initialement au boîtier de commande, pour chaque type de cartouche autorisé, le nombre total de cartouches embarquées à bord du dispositif d'emport correspondant et le boîtier de commande (4) calcule et affiche la somme totale des cartouches de chaque type autorisé embarquées à bord de l'appareil, et en ce que, après le déroulement du programme de test des cartouches, le boîtier de commande (4) décompte le nombre de cartouches de chaque type autorisé qui ont été invalidées et affiche le nombre total de cartouches valides de chaque type autorisé présentes à bord de l'appareil.

22. Procédé selon la revendication 21, caractérisé en ce que chaque cartouche tirée est décomptée par le boîtier de gestion et de distribution correspondant, cette information est transmise au boîtier de commande qui décompte ladite cartouche du nombre total de cartouches valides du même type calculé et met à jour l'affichage du nombre total de cartouches valides de ce type.

23. Procédé selon l'une quelconque des revendications 15 à 22, caractérisé en ce qu'après les phases d'initialisation du chargement en cartouches, chaque boîtier de gestion et de distribution et le boîtier de commande déroulent indéfiniment un programme bouclé d'auto-contrôle de leur matériel, de leur logiciel et leurs lignes de communication, chaque boîtier de gestion et de distribution contrôlant en outre son chargement en cartouches, ledit programme bouclé d'auto-contrôle pouvant être interrompu à tout moment par un ordre de tir.

## Patentansprüche

1. Selektive Abschußeinrichtung von Munition, wie beispielsweise Kartuschen, für ein Flugzeug oder eine andere Vorrichtung mit mindestens einer Aufnahmeeinrichtung (2G, 2D) für eine Vielzahl von Munitionsteilen eines oder mehrerer unterschiedlicher Typen und mit elektronischen Einrichtungen zur wahlweisen Abgabe eines Zündbefehles für mindestens einen Munitionsteil eines vorgegebenen Typs unabhängig von dessen Lage in der Aufnahmeeinrichtung und zum Aktualisieren von Zähleinrichtungen für die Munition jeden Typs, der an Bord der Einrichtung zur Verfügung steht, dadurch gekennzeichnet, daß

a) die Aufnahmeeinrichtung (2G, 2D) in an sich bekannter Weise aufweist,

— Einrichtungen (9) zur Aufname einer Vielzahl von beweglichen und austauschbaren modularen Magazinen (11) von einer oder mehreren Bauarten, die jeweils mit mindestens einer aus einer Vielzahl von Kartuschenarten aufgeladen sind und jeweils einen Identifikationscode in Abhängigkeit von der Magazinbauart und vom Kartuschentyp, mit dem dieses versehen ist, besitzen,

— mindestens einen Elektronikmodul (10) zum Zünden der jedem Magazin (11) zugeordneten Kartuschen,

wobei die elektronischen Einrichtungen die folgenden Bestandteile umfassen :

b) eine Steuerelektronik (17G, 17D) zum Beschicken und wahlweisen Verteilen von Zündbefehlen, die jeder Aufnameeinrichtung zugeordnet ist und einen ersten programmierbaren Speicher (54) aufweist, in dem erste repräsentative Parameter über die Magazinbauarten und die zugelassenen Arten von Kartuschen gespeichert sind, wobei die Steuer- und Verteilungselektronik in der Lage ist, die Adresse und den Identifikationscode eines jeden Magazins zu lesen, die wirksame Beschickung der entsprechenden Aufnahmeeinrichtung mit Kartuschen unterschiedlicher Typen zu inventarisieren, Typ für Typ der inventarisierten Kartuschen in Abhängigkeit von den ersten im ersten programmierbaren Speicher (54) gespeicherten Parametern für gültig zu erklären, wahlweise die Verteilung der Zündbefehle für die für gültig erklärten Kartuschen zu befehlen und das Beschickungsinventar in Abhängigkeit von den gezündeten Kartuschen zu aktualisieren, und

c) eine Befehlselektronik (4) die an jede Steuer- (17G, 17G) und Verteilungselektronik angeschlossen ist und Einrichtungen (25-28) zur Anzeige von Informationen über den Zustand der Abschußeinrichtung sowie einen zweiten programmierbaren Speicher (41) aufweist, der mit den ersten repräsentativen Parametern über die Magazinbauarten und die zugelassenen Kartuschenarten und mit zweiten Parametern, die unterschiedliche Abschußfolgen der Kartuschen eines oder mehrerer Typen, die verwendet werden können, repräsentieren, aufladbar ist, wobei die Befehlselektronik (4) die ersten Parameter im ersten programmierbaren Speicher (54) einer jeden Steuer- und Verteilungseinrichtung (17G, 17D) programmieren, in Abhängigkeit eines gegebenen Zündbefehles eine der Abschußsequenzen auswählen, mit Hilfe von mindestens einer Steuer- (17G, 17D) und Verteilungselektronik den Abschuß von einer oder mehreren Kartuschen einer oder mehreren Arten gemäß der ausgewählten Sequenz bewirken und auf der Grundlage von Informationen, die von den Steuer- und Verteilungselektroniken (17G, 17D) geliefert worden sind, die Zahl der zur Verfügung stehenden gültigen Kartuschen jedes Typs berechnen und die entsprechenden Zahlen auf den Anzeigeeinrichtungen (26-28) anzeigen kann.

2. Einrichtung nach Anspruch 1, dadurch gekennzeichnet, daß die Befehlselektronik (4) an eine äußere Entscheidungseinrichtung (7) angeschlossen ist und daß bestimmte der mindestens einen Schießsequenz von dieser Entscheidungseinrichtung in Abhängigkeit von den Eigenschaften der erfaßten Gefahren ausgewählt sind.

3. Einrichtung nach Anspruch 2, dadurch gekennzeichnet, daß sie einen Betriebsartselektor (330) für manuellen Befehl, nämlich eine Betriebsart zur automatischen Auslösung einer Schießsequenz über die äußere Entscheidungseinrichtung (7) und eine Betriebsart zur manuellen Auslösung, und eine Wähleinrichtung (32) zum Auswählen einer aus der Vielzahl von Schießsequenzen für manuelle Auslösung aufweist.

4. Einrichtung nach einem der Ansprüche 1 bis 3, dadurch gekennzeichnet, daß die programmierbaren Speicher (41, 34) von einem elektrisch programmierbaren und löschbaren Typ (EEPROM) und über eine Reihenschaltung (22) an einen Leser (21) des Moduls für die Eingabe von Parametern angeschlossen sind.

5. Einrichtung nach einem der Ansprüche 1 bis 4, dadurch gekennzeichnet, daß die Befehlselektronik (4) an jede Steuer- (17G, 17D) und Verteilungselektronik über eine Reihenschaltung (19G, 19D) angeschlossen ist.

6. Einrichtung nach einem der Ansprüche 1 bis 5, dadurch gekennzeichnet, daß jeder Zündmodul (10) Zündkanäle (MAF1...MAF24) in einer Zahl, die der maximalen Zahl der Zünder der Kartuschen in einem Magazon (11) entspricht, aufweist und daß jeder Zünder eines Magazins (11) mit Hilfe der Steuer- und Verleilungselektronik über eine Auswahl des entsprechenden Moduls und des entsprechenden Zündkanales adressierbar ist.

7. Einrichtung nach Anspruch 6, dadurch gekennzeichnet, daß jede Steuer- (17G, 17D) und Verteilungselektronik eine Schnittstelle (48) aufweist, die eine erste Reihe von Modulwählausgängen (SM1....SM14), von denen jeder an einen unterschiedlichen Zündmodul angeschlossen ist, und eine zweite Reihe von Kanalwählausgängen (CV1...CV12) besitzt, die jeder parallel an die homologen Zündkanäle sämtlicher Module angeschlossen sind.

8. Einrichtung nach Anspruch 7, dadurch gekennzeichnet, daß jeder Zündkanal (MAF1....MAF24) einen Leistungsverstärker (60) aufweist, der durch ein UND-Glied (61) gesteuert wird, wobei diese UND-Glieder einzeln über einen ihrer Eingänge an die Wählausgänge der Kanäle (CV1...CV12) und gemeinsam über den anderen ihrer Eingänge an den Wählausgang (SM1....SM14) des Moduls angeschlossen sind, von dem sie einen Teil bilden.

9. Einrichtung nach einem der Ansprüche 7 und 8, dadurch gekennzeichnet, daß jede Steuer- und Verteilungselektronik (17G, 17D) eine Reihe Eingänge (REC1...REC6) zum Lesen der Identifikationscodes der Magazine aufweist, die parallel an Codiereinrichtungen (ID1...ID14) der Magazine angeschlossen sind, anbei die Elektronik (17G, 17D) über die Auswahl eines entsprechenden Zündmoduls das Lesen eines Identifikationscodes befiehlt.

10. Einrichtung nach einem der Ansprüche 1 bis 9, dadurch gekennzeichnet, daß diese Steuer- (17G, 17D) und Verteilungselektronik und die Befehlselektronik (4) einen Speisestromkreis (49 ; 35), Schnittstellenkreise (47, 48 ; 37) und eine Zentraleinheit (46; 36) unfassen, die die folgenden Bestandteile aufweist :

— einen Mikroprozessor (51 ; 38),
— einen Festspeicher (52 ; 39), der das Operationsprogramm für jede Elektronik enthält,
— einen Arbeitsspeicher (53 ; 40),
— den programmierbaren Speicher (54 ; 41)

— eine serielle programmierbare Kommunikationsschnittstelle (55 ; 42),

— einen programmierbaren Verzögerungskreis (56, 44), der die Übertragungsgeschwindigkeit über die Reihenschaltung fixiert,

— einen Zeitgeber (43) und

— eine Überwachungseinrichtung (45), die mögliche Überschreitungen der Behandlungsdauern prüft und im Falle einer Überschreitung ein Alarmsignal erzeugt.

11. Einrichtung nach einem der Ansprüche 1 bis 10, dadurch gekennzeichnet, daß jede Aufnahmeeinrichtung (2G, 2D) für die Kartuschen eine aerodynamische Palette (15) umfaßt, die einen im Speisestromkreis (16) der Zündmodule (10) befindlichen Schalter steuert, wobei die Palette (15) unter den Auswirkungen einer vorgegebenen Luftströmung gegenüber einem Kippen aus einer inaktiven Position, in dar die Leistungsmodule nicht gespeist sind und der Abschuß der Kartuschen verboten ist, in eine aktive Position, in der die Leistungsmodule gespeist sind und der Abschuß der Kartuschen zulässig ist, empfindlich ist.

12. Einrichtung nach den Ansprüchen 10 und 11, dadurch gekennzeichnet, daß jede Steuer- (17G, 17D) und Verteilungselektronik einen Sicherheitskreis (50) aufweist, der der Elektronik eine Abgabe von Abschußbefehlen und einen Test der Kartuschen verbieten kann, wenn sich die aerodynamische Palette (15) in einer inaktiven Position befindet.

13. Einrichtung nach Anspruch 12, dadurch gekennzeichnet, daß jede Steuer- (17G, 17D) und Verteilungselektronik einem Druckkopf (20) zugeordnet ist, mittels dem die Elektronik (17G, 17D) nach der Beschickung der Aufnahmeeinrichtung (2G, 2D) den beginn ihrer Beschickung einleiten kann.

14. Einrichtung nach einem der Ansprüche 1 bis 13, dadurch gekennzeichnet, daß sie mit Kartuschen des mindestens einen Typs versehen werden kann, der Kartuschen als elektromagnetische Köder, Kartuschen als Infrarotköder und Kartuschen zur Erzeugung von aktiven Störungen umfaßt.

15. Verfahren zum wahlweisen Abschießen von Kartuschen mit Hilfe einer Einrichtung nach einem der Ansprüche 1 bis 14, bei der jede Aufnahmeeinrichtung mit Magazinen einer oder einer Vielzahl von Bauarten versehen ist, welche mit einer aus einer Vielzahl von Typen von vorgegebenen Kartuschen beschickt sind, die in Abhängigkeit von ihrer zu erfüllenden Aufgabe ausgewählt sind, gekennzeichnet durch die folgenden Schritte :

a) man führt in den zweiten programmierbaren Speicher (41) der Befehlselektronik (4) die erwähnten repräsentativen Parameter ein, die zum einen Teil die Magazinbauarten und autorisierten Kartuschen und zum anderen Teil die unterschiedlichen Abschußsequenzen, die benutzt werden, betreffen, ein,

b) man überführt in den ersten programmierbaren Speicher (54) einer jeden Steuer- (17G, 17D) und Verteilungselektronik die ersten repräsentativen Parameter in bezug auf die Magazinbauarten und autorisierten Kartuschentypen,

c) man aktiviert jede Aufnahmeeinrichtung (2G, 2D), damit jede Steuer- und Verteilungselektronik die folgenden Schritte ausführen kann :

— Lesen des Identifikationscodes und der Adresse eines jeden beladenen Magazins ;

— Vergleichen der gelesenen Magazincodes mit den Codes der autorisierten Magazine, die in dem ersten programmierbaren Speicher (54) nach der Phase D gespeichert worden sind ; und

— für gültig Erklären der Magazine, deren Code autorisiert ist.

16. Verfahren nach Anspruch 15, dadurch gekennzeichnet, daß der Schritt der Einführung der ersten repräsentativen Parameter der Magazinbauarten und der Kartuschentypen die Ladung des zweiten programmierbaren Speichers (41) der Befehlselektronik (4) mit folgendem umfaßt :

a) Zuordnungstabellen der Magazincodes, die für jeden Magazincode definieren :

— den Typ der verwendeten Kartuschen,

— die Bauart des betroffenen Magazins,

— den Typ des Zünders der Kartuschen,

b) Bezugstabellen der Magazine, die für jede Magazinbauart definieren :

— die Zahl der untergebrachten Kartuschen, die das Magazin enthält,

— die Zahl der Zünder jeder Kartusche,

— die Kanalzahl jedes Zünders.

17. Verfahren nach Anspruch 16, dadurch gekennzeichnet, daß auf der Grundlage der gelesenen und für gültig erklärten Magazincodes, der Zuordnungstabellen der Magazincodes und der Bezugstabellen der Magazine jede Steuer- und Verteilungselektronik (17G, 17D) für jeden Kartuschentyp eine Beschickungstabelle konstruiert, die so viel Elementartabellen enthält, die vom entsprehenden Typ Kartuschen vorhanden sind, wobei jede Elementartabelle die Adresse und den Zustand eines jeden Zünders von jeder Kartusche enthält.

18. Verfahren nach Anspruch 17, dadurch gekennzeichnet, daß

— jede im zweiten programmierbarer Speicher (41) der Befehlselektronik gespeicherte Abschußsequenz der Kartuschen mehrere geeignete Untersequenzen enthält, und zwar jeweils eine für einen Kartuschentyp, wobei jede Untersequenz eine Beschickungstabelle auswertet, die Informationen enthält über :

— das Prioritätsniveau der Untersequenz

— den Typ der betroffenen Kartuschen

— den Typ des ausgewählten Zünders

— die Verzögerung des Abschusses der ersten

**17**

Kartusche
— die Art des Abschusses der Kartuschen, die reguliert werden kann oder nicht.

19. Verfahren nach Anspruch 18, dadurch gekennzeichnet, daß die Abschußsequenzen u.a. eine Schnellentleerungssequenz umfassen, die auf manuellen Befehl den sofortigen Ausstoß sämtlichen Kartuschen eines oder mehrerer vorgegebener Typen bewirkt.

20. Verfahren nach einem der Ansprüche 18 und 19, dadurch gekennzeichnet, daß bei Anordnung der Palette (15) in der aktiven Position jede Steuer- (17G, 17D) und Verteilungselektronik ein Programm zum Testen der Zünder jeder eingegebenen Kartusche durchführt und von der Beschickungstabelle die unwirksamen Kartuschen abzieht.

21. Verfahren nach Anspruch 20, dadurch gekennzeichnet, daß jede Steuer- und Verteilungselektronik anfangs der Befehlselektronik für jeden autorisierten Kartuschentyp die Gesamtzahl der entsprechenden in die Aufnahmeeinrichtung eingegebenen Kartuschen mitteilt und daß die Befehlselektronik (4) die Gesamtsumme der Kartuschen jedes autorisierten Typs, die sich an Bord der Einrichtung befinden, errechnet und anzeigt und daß nach Durchführung des Testprogramms der Kartuschen die Befehlselektronik (4) die Zahl der Kartuschen jedes autorisierten Typs, die unwirksam geworden sind, abzieht und die Gesamtzahl der wirksamen Kartuschen jedes autorisierten Typs, die sich an Bord der Einrichtung befinden, anzeigt.

22. Verfahren nach Anspruch 21, dadurch gekennzeichnet, daß jede abgeschossene Kartusche von der entsprechenden Steuer- und Verteilungselektronik abgezogen wird und daß diese Information der Befehlselektronik zugeführt wird, die diese Kartusche von der errechneten Gesamtzahl der wirksamen Kartuschen des gleichen Typs abzieht und die Anzeige der Gesamtzahl der wirksamen Kartuschen dieses Typs auf den neuesten Stand bringt.

23. Verfahren nach einem der Ansprüche 15 bis 22, dadurch gekennzeichnet, daß nach den Phasen der Initialisierung der Beschickung der Kartuschen jede Steuer- und Verteilungselektronik und die Befehlselektronik in unbegrenzter Weise ein Selbstüberwachungsschleifenprogramm durchführen, mit dem sie ihr Material, ihre Software und ihre Kommunikationsleitungen überwachen, wobei jede Steuer- und Verteilungselektronik u.a. ihre Beschickung mit Kartuschen überwacht und das Selbstüberwachungsschleifenprogramm jeden Augenblick durch einen Abschußbefehl unterbrochen werden kann.

## Claims

1. Device for the selective firing of ammunition such as cartridges for an aeroplane of other aircraft, comprising at least a device (2G, 2D) for launching a plurality of ammunition of one or more different types and electronic means for selectively controlling the ignition of at least one ammunition of a given type independently of its position in the launching device and for updating means for counting the ammunition of each type available on board the aircraft, characterised in that :

a) the launching device (2G, 2D) incorporates, as known in itself :

— means (9) for receiving several modular magazines (11), removable and exchangeable, of one or more models, each loaded with at least one from amongst several types of cartridge and each having an identification code depending on the model of magazine and the type of cartridge with which it is equipped,

— at least one cartridge igniting electronic module (10) associated with each magazine (11),

and in that the said electronic means comprise :

b) an electronic box (17G, 17D) for managing the loading and selective distribution of the firing commands associated with each launching device and incorporating a first programmable memory (54), in which are stored first parameters representing the models of magazine and types of cartridge authorized, the said electronic management and distribution box being suitable for reading the address and identification code of each magazine, making an inventory of the cartridges of different types actually loaded in the said launching device, validating type by type the said cartridges inventoried in accordance with the said first parameters stored in the said first programmable memory (54), controlling selectively the distribution of the commands for igniting the said validated cartridges, and updating the said loading inventory according to the said ignitions, and

c) an electronic control box (4) connected to each electronic management and distribution box (17G, 17D) and incorporating means (25-28) for displaying data on the state of the said firing device and a second programmable memory (41) suitable for being loaded with the said first parameters representing the models of magazine and the types of cartridge authorised and with second parameters representing different firing sequences for cartridges of one or more types capable of being used, the said electronic control box (4) being suitable for programming the said first parameters in the said first programmable memory (54) of each management and distribution device (17G, 17D), selecting one of the said firing sequences in response to the receipt of a given firing command, generating, through at least one management and distribution box (17G, 17D), the firing of one or more cartridges of one or more types in accordance with the said selected sequence, and calculating, from data supplied by the said electronic management and distribution boxes (17G, 17D), the number of valid cartridges available in each type and displaying the said numbers on the said display means (26-28).

2. Device according to claim 1, characterised in that the electronic control box (4) is connected to an external decision device (7) and in that some at least of the said firing sequences are selected by this device according to the characteristics of threats detected.

3. Device according to claim 2, characterised in that it has a manually controlled mode selector (33), namely a mode for automatic triggering of the firing sequence by the external decision device (7) and a mode for manual triggering, as well as a device (32) for selecting one from amongst several manually triggered firing sequences.

4. Device according to any one of claims 1 to 3, characterised in that the said programmable memories (41, 54) are of the electrically erasable programmable (EEPROM) type and is [sic] connected by means of a serial link (22) to a parameter insertion module reader (21).

5. Device according to any one of claims 1 to 4, characterised in that the electronic control box (4) is connected to each management and distribution box (17G, 17D) by a serial link (19G, 19D).

6. Device according to any one of claims 1 to 5, characterised in that each ignition module (10) incorporates ignition channels (MAF1.....MAF24) equal in number to the maximum number of cartridge primers in a magazine (11), and in that each primer in a magazine (11) can be addressed from the management and distribution box by selecting the corresponding module and ignition channel.

7. Device according to claim 6, characterised in that each management and distribution box (17G, 17D) incorporates an interface (48) having a first series of module selection outputs (SM1.....SM14), each of which is connected to a different ignition module, and a second series of channel selection outputs (CV1.....CV12) which are each connected in parallel to the homologous ignition channels of all the modules.

8. Device according to claim 7, characterised in that each ignition channel (MAF1.....MAF24) incorporates a power amplifier (60) controlled by an AND gate (61), the said gates being connected individually by one of their inputs to the channel selection outputs (CV1.....CV12) and collectively by the other one of their inputs to the module selection output (SM1.....SM14) of which they form part.

9. Device according to either one of claims 7 and 8, characterised in that each management and distribution box (17G, 17D) incorporates a series of inputs (REC1.....REC6) for reading the magazine identification codes, which are connected in parallel to the magazine coding means (Id1.....Id14), the said box (17G, 17D) controlling the reading of a magazine identification code by the selection of the corresponding ignition module.

10. Device according to any one of claims 1 to 9, characterised in that each management and distribution electronic box (17G, 17D) and the electronic control box (4) comprise a supply circuit (49 ; 35), interface circuits (47, 48 ; 37) and a central unit (46 ; 36), the said central unit incorporating :
— a microprocessor (51 ; 38),
— a read-only memory (52 ; 39) which contains the operational program for each box,
— a working read-write memory (53 ; 40),
— the said programmable memory (54 ; 41),
— a programmable serial communication interface (55 ; 42),
— a programmable time delay circuit (56, 44) which determines the transmission rate in serial link,
— a clock (43), and
— a watchdog (45) which monitors for the processing times being exceeded and generates an alarm in any such event.

11. Device according to any one of claims 1 to 10, characterised in that each cartridge launching device (2G, 2D) comprises an aerodynamic vane (15) controlling a contactor interposed in the circuit (16) supplying the ignition modules (10), the said vane (15) being able to tilt under the effect of a predetermined relative wind, from an inactive position in which the power modules are not fed and the firing of cartridges is inhibited, to an active position in which the power modules are fed and the firing of cartridges is enabled.

12. Device according to claims 10 and 11, characterised in that each management and distribution electronic box (17G, 17D) comprises a safety circuit (50) suitable for inhibiting the said box from delivering commands for firing and testing cartridges when the said aerodynamic vane (15) is in the inactive position.

13. Device according to claim 12, characterised in that each management and distribution box (17G, 17D) is associated with a push button (20) enabling the said box (17G, 17D), following the loading of the launching device (2G, 2D), to proceed with the initialising of its loading.

14. Device according to any one of claims 1 to 13, characterised in that it is suitable for being equipped with cartridges of at least one of the types comprising electromagnetic chaff cartridges, infrared chaff cartridges and active jamming cartridges.

15. Method for the selective firing of cartridges by means of a device according to any one of claims 1 to 14, according to which each launching device is equipped with magazines of one or more models, each loaded with one from amongst several given types of cartridge, chosen according to the task to be fulfilled, characterised in that :

a) into the second programmable memory (41) of the control box (4) are introduced the said parameters representing on the one hand the models of magazine and types of cartridge authorised, and on the other hand the different firing sequences capable of being used,

b) the said first parameters representing the models of magazine and the types of cartridge authorised are transferred into the first programmable memory (54) of each management and distribution box (17G, 17D),

c) each launching device (2G, 2D) is activated to enable each management and distribution box :

— to read the identification code and address of each magazine on board ;

— to compare the magazine codes read with the magazine codes authorised which are stored in the said first programmable memory (54) following the said phase b) ; and

— to validate the magazines whose code is authorised.

16. Method according to claim 15, characterised in that the step in which the first parameters representing the models of magazine and types of cartridge are introduced comprises the loading into the second programmable memory (41) of the control box (4) of :

a) magazine code assignment tables defining for each magazine code :

— the type of cartridge used,

— the model of magazine concerned,

— the type of cartridge primer,

b) magazine reference tables defining for each model of magazine :

— the number of cartridge chambers which the magazine contains,

— the number of primers for each cartridge,

— the channel number for each primer.

17. Method according to claim 16, characterised in that, from the magazine codes read and validated, the magazine code assignment tables and the magazine reference tables, each management and distribution box (17G, 17D) constructs, for each type of cartridge, a loading table containing as many constituent tables as there are cartridges of the type under consideration, each constituent table containing the address and state of each primer for each cartridge.

18. Method according to claim 17, characterised in that :

— each cartridge firing sequence stored in the second programmable memory (41) of the control box comprises several sub-sequences each peculiar to a type of cartridge, each sub-sequence using a loading table being described by :

— the priority level of the sub-sequence

— the type of cartridge concerned

— the type of primer selected

— the firing delay of the first cartridge

— the mode of firing the cartridges, which may be regular or otherwise.

19. Method according to claim 18, characterised in that the said firing sequences comprise in addition a quick-eject sequence enabling, on manual control, the immediate ejection of all the cartridges of one or more predetermined types.

20. Method according to either one of claims 18 and 19, characterised in that, when the said vane (15) is in the active position, each management and distribution box (17G, 17D) runs a program for testing the primers for each cartridge on board and removes any invalidated cartridges from the loading table.

21. Method according to claim 20, characterised in that each management and distribution box supplies initially to the control box, for each type of cartridges authorised, the total number of cartridges loaded in the corresponding launching device and the control box (4) calculates and displays the total number of cartridges of each authorised type loaded on board the aircraft, and in that, after the running of the cartridge test program, the control box (4) deducts the number of cartridges of each authorised type which have been invalidated and displays the total number of valid cartridges of each authorised type present on board the aircraft.

22. Method according to claim 21, characterised in that each cartridge fired is deducted by the corresponding management and distribution box, this information is transmitted to the control box, which deducts the said cartridge from the total number of valid cartridges of the same type calculated and updates the display of the total number of valid cartridges of this type.

23. Method according to any one of claims 15 to 22, characterised in that after the cartridge loading initialising phases, each management and distribution box and the control box run indefinitely a program loop for automatically controlling their hardware, their software and their communication lines, the said automatic control program loop being able to be interrupted at any time by a firing command.

FIG.:1

FIG.:1A

ELECTRONIQUE DE PUISSANCE

Poussoirs tir

Organe de décision externe

BGD

FIG.:2

FIG.:3

FIG.:4

FIG.:5

FIG.:10

Initialisation
et
test des lignes

TB EEPROM = ON ?

NON | OUI

Transfert des tables de référence des chargeurs et des tables d'af_fectation des codes chargeurs vers les BGD

TB EEPROM = OFF

Saut en Ø2

Ø1 {

"Handshake" LMIP

OUI | Test dialogue PC_LMIP correct ? | NON

Transfert des tables :
- d'affectation des codes chargeurs
- de références chargeurs
- de séquences de tir

vers le PC

TB EEPROM = ON

Transfert du MIP

| F A I R E | En absence de panne |
| | Gestion de message |
| | Gestion du calendrier de tir |
| | Auto_test et surveillance des lignes |

Ø2 {

RTSMIP = ON ?

OUI | NON

Saut en transfert MIP (Ø1)

Mise en halte ⟶

IT TIR

FIG.: 6

## FIG.:7

| Code chargeur | |
|---|---|
| Type de cartouche | |
| Référence du chargeur | |
| Amorce | Amorce |

Table d'affectation des codes chargeurs

## FIG.:8

| Référence chargeur | |
|---|---|
| Nombre de logements | |
| Nombre d'amorces | |
| Adresse A amorce | Adresse B amorce |
| Adresse A amorce | Adresse B amorce |

Table de référence des chargeurs

| Initialisation matérielle et logicielle Réception de la demande de version logicielle puis réponse | | |
|---|---|---|
| **F A I R E** | Auto-test Surveillance du chargement | |
| | 1er passage après mise sous tension | |
| | NON | OUI |
| | Reconnaissance des codes chargeurs Modification des tables si nécessaire | |
| | Hors sécurité | En sécurité |
| | Test global des cartouches si initialisation du chargement | Surveillance de l'initialisation du chargement et des modifications des tables d'affectation |
| | Gestion des demandes de tir | |
| En absence de pannes | | |
| ARRET | | |

FIG.:9